# EUROPÄISCHE PATENTSCHRIFT

(11) **EP 4 025 810 B1**
(45) Veröffentlichungstag und Bekanntmachung des Hinweises auf die Patenterteilung: **25.06.2025**
(21) Anmeldenummer: 20767757.6
(22) Anmeldetag: 02.09.2020
(51) Int. Cl.: F16J 15/06, F16J 15/08, F16J 15/44

(54) **DICHTUNGSANORDNUNG, BATTERIE- ODER STEUERUNGSKASTEN, KRAFTFAHRZEUG UND VERFAHREN ZUR HERSTELLUNG EINER DICHTUNGSANORDNUNG**
SEALING ARRANGEMENT, BATTERY BOX OR CONTROL BOX, MOTOR VEHICLE AND METHOD FOR PRODUCING A SEALING ARRANGEMENT
DISPOSITIF D'ÉTANCHÉITÉ, BOÎTE DE BATTERIE OU BOÎTE DE COMMANDE, VÉHICULE À MOTEUR ET PROCÉDÉ POUR PRODUIRE UN DISPOSITIF D'ÉTANCHÉITÉ

(30) Priorität: 06.09.2019 DE 102019213614
(43) Veröffentlichungstag der Anmeldung: 13.07.2022
(73) Patentinhaber: ElringKlinger AG, 72581 Dettingen (DE)
(72) Erfinder: GRUHLER, Tobias Michael, 72793 Pfullingen (DE); DWENGER, Stefan, 72762 Reutlingen (DE); LINKOR, Robert, 72800 Eningen u.A. (DE)
(74) Vertreter: DTS Patent- und Rechtsanwälte PartmbB
(86) Internationale Anmeldenummer: PCT/EP2020/074482
(87) Internationale Veröffentlichungsnummer: WO 2021/043833

(56) Entgegenhaltungen:
- WO-A1-2019/175391
- DE-U1- 202007 009 319
- US-A- 3 175 832
- US-A- 3 738 670
- US-A- 5 149 109

## Beschreibung

Die vorliegende Erfindung betrifft eine Dichtungsanordnung, insbesondere eine Dichtungsanordnung zur Abdichtung eines ersten Fluidraums von einem zweiten Fluidraum oder mehreren Fluidräumen. Die Dichtungsanordnung umfasst ein Dichtelement zur Anordnung zwischen einem ersten Objekt und einem zweiten Objekt.

Dichtungsanordnungen sind in DE 20 2007 009 319 U1, in US-Patent Nr. 5,149,109, in US-Patent Nr. 3,738,670, in US-Patent Nr. 3,175,832 und in WO 2019/175391 A1 beschrieben.

Aus dem Stand der Technik sind sogenannte Trägerdichtungen oder Metall-Elastomer-Dichtungen bekannt, die zur Abdichtung zwischen zwei Bauteilen oder Objekten eingesetzt werden.

Diese aus dem Stand der Technik bekannten Träger- oder Metall-Elastomer-Dichtungen weisen üblicherweise einen insbesondere metallischen Grundkörper und einen am Grundkörper angeordneten elastischen Dichtkörper auf. Mittels derartiger Träger- oder Metall-Elastomer-Dichtungen können zwei Objekte einfach dichtend im Bereich einer planen Verbindungsfläche miteinander verbunden werden, wobei ein Einbringen einer Nut in die Bauteile zur Befestigung eines Dichtelements vorzugsweise vermieden werden kann. Toleranzprobleme beim Einbringen der Nut treten daher nicht auf. Im Gegensatz zu einer Flüssigabdichtung, welche oftmals bei zu verbindenden Bauteilen mit einer planen Verbindungsfläche gewählt werden, sind Träger- oder Metall-Elastomer-Dichtungen zudem vergleichsweise leicht wieder demontierbar.

Zudem können miteinander zu verbindende Objekte, insbesondere miteinander zu verbindende metallische Objekte, durch den metallischen Grundkörper einer Träger- oder Metall-Elastomer-Dichtung durchkontaktiert werden. Somit kann mittels der Träger- oder Metall-Elastomer-Dichtung eine erhöhte elektromagnetische Verträglichkeit (EMV) bereitgestellt werden. Folglich erfreuen sich Träger- oder Metall-Elastomer-Dichtungen einer wachsenden Beliebtheit.

Üblicherweise werden die Dichtkörper der Träger- oder Metall-Elastomer-Dichtungen in einem Spritzgussverfahren an einen insbesondere ringförmigen, vorzugsweise metallischen, Grundkörper angespritzt. Die Größe eines zu verwendenden Spritzgusswerkzeugs, insbesondere die Größe einer benötigten Spritzgussmaschine, wird dabei unter anderem durch die Größe bzw. Dimension des Grundkörpers bestimmt.

Bislang ist es daher beispielsweise nicht möglich, Träger- oder Metall-Elastomer-Dichtungen für Batteriekästen von Elektrofahrzeugen herzustellen, da diese aufgrund ihrer Größe und/oder Dimension nicht einstückig in bekannten Spritzgusswerkzeugen und/oder Spritzgussmaschinen herstellbar sind.

Der vorliegenden Erfindung liegt daher die Aufgabe zugrunde, eine Dichtungsanordnung bereitzustellen, welche einerseits einfach und kostengünstig herstellbar ist und zudem eine zuverlässige Abdichtung eines ersten Fluidraums von einem zweiten Fluidraum ermöglicht.

Diese Aufgabe wird durch eine Dichtungsanordnung mit den Merkmalen des Anspruchs 1 gelöst.

Das Dichtelement der Dichtungsanordnung umfasst zwei oder mehrere mittelbar oder unmittelbar miteinander verbindbare oder miteinander verbundene Dichtelementbauteile, welche jeweils einen Grundkörperteil und einen am Grundkörperteil angeordneten elastischen Dichtkörperteil umfassen.

Die Dichtelementbauteile sind dabei insbesondere derart mittelbar oder unmittelbar miteinander verbindbar oder miteinander verbunden, dass sich die Dichtelementbauteile gemeinsam zu dem Dichtelement ergänzen. Insbesondere liegen die Dichtelementbauteile dabei in einer Umfangsrichtung zumindest teilweise, vorzugsweise auf Stoß, aneinander an, insbesondere in einem Stoßbereich zwischen zwei Dichtelementbauteilen.

Unter einer unmittelbaren Verbindung der Dichtelementbauteile wird im Rahmen dieser Beschreibung und der beigefügten Ansprüche insbesondere verstanden, dass die Dichtelementbauteile ohne Zuhilfenahme weiterer Bauteile miteinander verbunden oder verbindbar sind.

Unter einer mittelbaren Verbindung der Dichtelementbauteile wird im Rahmen dieser Beschreibung und der beigefügten Ansprüche insbesondere verstanden, dass die Dichtelementbauteile mittels eines oder mehrerer zusätzlicher Bauteile miteinander verbunden oder verbindbar sind.

Beispielsweise ist es denkbar, dass die Dichtelementbauteile mittelbar über das erste und/oder das zweite Objekt miteinander verbunden werden, insbesondere durch Anordnung der Dichtelementbauteile zwischen dem ersten und dem zweiten Objekt.

Günstig kann es beispielsweise sein, wenn die Dichtelementbauteile durch Positionieren der Dichtelementbauteile relativ zu dem ersten Objekt und/oder relativ zu dem zweiten Objekt mittelbar miteinander verbindbar sind, beispielsweise durch Positionieren der Dichtelementbauteile an dem ersten Objekt und/oder an dem zweiten Objekt mittels eines oder mehrerer Positioniervorsprünge.

Die Grundkörperteile der Dichtelementbauteile bilden einen vorzugsweise formstabilen Grundkörper des Dichtelements.

Insbesondere bilden die Grundkörperteile der Dichtelementbauteile einen Grundkörper zum Bereitstellen einer lasttragenden Funktion des Dichtelements.

Unter einer lasttragenden Funktion wird im Rahmen dieser Beschreibung und der beigefügten Ansprüche insbesondere eine Übertragung von Druckkräften, insbesondere zwischen zwei Objekten oder Bauteilen, verstanden.

Die elastischen Dichtkörperteile der Dichtelementbauteile bilden einen elastischen Dichtkörper zum Bereitstellen einer Dichtfunktion des Dichtelements.

Der Grundkörper des Dichtelements ist vorzugsweise ringförmig, insbesondere ringförmig geschlossen, ausgebildet, wenn die Dichtelementbauteile miteinander verbunden sind.

Die Dichtelementbauteile bilden dabei vorzugsweise Segmente eines ringförmig geschlossenen Dichtelements.

Insbesondere ergänzen sich die miteinander verbundenen Dichtelementbauteile zu einer geschlossenen Ringform.

Unter einer Ringform ist im Rahmen dieser Beschreibung und der beigefügten Ansprüche insbesondere eine geschlossene Form des Dichtelements zu verstehen. Die Ringform des Dichtelements kann dabei insbesondere eine Kreisringform oder eine von einer Kreisringform abweichende Form sein.

Da die Dichtelementbauteile miteinander verbindbar sind, wobei die Grundkörperteile einen Grundkörper bilden und wobei die Dichtkörperteile einen Dichtkörper bilden, kann vorzugsweise erreicht werden, dass die elastischen Dichtkörperteile aufgrund der kleineren Größe oder Dimension der einzelnen Dichtelementbauteile an jeweils einen Grundkörperteil in einem Spritzgussprozess angespritzt werden können. Anschließend können die einzelnen Dichtelementbauteile zu einem Dichtelement verbunden werden. Daher kann insbesondere ermöglicht werden, dass die elastischen Dichtkörperteile in einem vergleichsweise kleinen Spritzgusswerkzeug und/oder einer vergleichsweise kleinen Spritzgussmaschine herstellbar sind.

Vorzugsweise sind der Grundkörper und/oder die Grundkörperteile aus einem zumindest näherungsweise unflexiblen oder steifen Material hergestellt.

Das Dichtelement und/oder der Grundkörper des Dichtelements sind vorzugsweise flächig ausgebildet.

Das Dichtelement und/oder der Grundkörper erstrecken sich insbesondere zumindest näherungsweise entlang einer Ebene, insbesondere entlang einer Haupterstreckungsebene, des Dichtelements.

Der elastische Dichtkörper und/oder die elastischen Dichtkörperteile sind vorzugsweise durch Spritzgießen, durch Compression Molding und/oder durch Transfer Compression Molding hergestellt.

Insbesondere sind der elastische Dichtkörper und/oder die elastischen Dichtkörperteile an den Grundkörper und/oder an die Grundkörperteile angespritzt.

Unter Anspritzen wird im Rahmen dieser Beschreibung und der beigefügten Ansprüche insbesondere ein Verbinden der Grundkörperteile mit den Dichtkörperteilen verstanden, wobei die elastischen Dichtkörperteile derart in einem Spritzgussverfahren hergestellt werden, dass sie am Grundkörper und/oder an den Grundkörperteilen befestigt sind.

Der elastische Dichtkörper und/oder die elastischen Dichtkörperteile sind insbesondere Spritzgussteile.

Vorzugsweise ist das Dichtelement eine Trägerdichtung, insbesondere eine Kunststoff-Trägerdichtung, und/oder eine Metall-Elastomer-Dichtung.

Der elastische Dichtkörper umfasst vorzugsweise eine oder mehrere Dichtlippen.

Günstig kann es sein, wenn die Dichtlippen des elastischen Dichtkörpers ringförmig geschlossen ausgebildet sind.

Beispielsweise ist es denkbar, dass an einer Innenkante des Grundkörpers eine Dichtlippe, insbesondere eine ringförmig geschlossene Dichtlippe, des elastischen Dichtkörpers angeordnet ist.

Eine an einer Innenkante des Grundkörpers angeordnete Dichtlippe ist insbesondere eine Primärdichtlippe.

Eine an einer Innenkante des Grundkörpers angeordnete Dichtlippe des elastischen Dichtkörpers bildet insbesondere einen Hauptdichtbereich des Dichtelements.

Vorzugsweise ist mittels einer an einer Innenkante des Grundkörpers angeordneten Dichtlippe eine Hauptdichtfunktion des Dichtelements bereitstellbar.

Alternativ oder ergänzend dazu ist es denkbar, dass an einer äußeren Kante des Grundkörpers eine Dichtlippe, insbesondere eine ringförmig geschlossene Dichtlippe, des elastischen Dichtkörpers angeordnet ist.

Eine an einer äußeren Kante des Grundkörpers angeordnete Dichtlippe ist insbesondere eine Sekundärdichtlippe.

Eine an einer äußeren Kante des Grundkörpers angeordnete Dichtlippe bildet insbesondere einen Zusatzdichtbereich des Dichtelements.

Vorzugsweise ist mittels einer an einer äußeren Kante des Grundkörpers angeordneten Dichtlippe eine Zusatzdichtfunktion des Dichtelements bereitstellbar, insbesondere zusätzlich zu einer Hauptdichtfunktion einer an einer Innenkante des Grundkörpers angeordneten Dichtlippe.

Mittels einer an einer äußeren Kante des Grundkörpers angeordneten Dichtlippe ist beispielsweise eine Abdichtung gegen Spritzwasser realisierbar.

Vorzugsweise ragen die eine oder die mehreren Dichtlippen in einer senkrecht zu einer Haupterstreckungsebene des Dichtelements verlaufenden Richtung über den Grundkörper des Dichtelements hinaus, insbesondere beidseitig.

Günstig kann es insbesondere sein, wenn sowohl an einer Innenkante des Grundkörpers als auch an einer äußeren Kante des Grundkörpers jeweils eine Dichtlippe des elastischen Dichtkörpers angeordnet ist, insbesondere eine ringförmig geschlossene Dichtlippe.

Vorzugsweise weist eine an einer Innenkante des Grundkörpers angeordnete Dichtlippe in einer senkrecht zu einer Haupterstreckungsebene des Dichtelements verlaufenden Richtung eine Höhe auf, welche größer ist als eine Höhe einer an einer äußeren Kante des Grundkörpers angeordneten Dichtlippe in der senkrecht zu der Haupterstreckungsebene des Dichtelements verlaufenden Richtung.

Ein elastischer Dichtkörperteil eines Dichtelementbauteils umfasst vorzugsweise jeweils einen oder zwei Dichtlippenabschnitte.

Beispielsweise ist es denkbar, dass der elastische Dichtkörperteil einen Dichtlippenabschnitt umfasst, welcher an einer Innenkante des Grundkörperteils des jeweiligen Dichtelementbauteils angeordnet ist.

Alternativ oder ergänzend dazu ist es denkbar, dass der elastische Dichtkörperteil einen Dichtlippenabschnitt umfasst, welcher an einer äußeren Kante des Grundkörperteils des jeweiligen Dichtelementbauteils angeordnet ist.

Günstig kann es sein, wenn die Dichtlippenabschnitte der elastischen Dichtkörperteile der Dichtelementbauteile des Dichtelements in einem Montagezustand der Dichtungsanordnung jeweils eine ringförmig geschlossene Dichtlippe des elastischen Dichtkörpers bilden.

Bei einer Ausgestaltung der Erfindung ist vorgesehen, dass die Dichtelementbauteile, insbesondere zur Herstellung einer oder mehrerer ringförmig geschlossener Formen des Grundkörpers, puzzleartig und/oder formschlüssig miteinander verbindbar sind.

Die Dichtelementbauteile sind insbesondere lösbar verbindbar.

Vorzugsweise sind die Dichtelementbauteile durch mittelbare oder unmittelbare Verbindung der Grundkörperteile miteinander, insbesondere an einem Stoßbereich der Grundkörperteile, verbindbar.

Unter einer mittelbaren Verbindung der Grundkörperteile wird im Rahmen dieser Beschreibung und der beigefügten Ansprüche insbesondere eine Verbindung der Grundkörperteile mittels an den Grundkörperteilen angeordneter elastischer Dichtkörperteile verstanden.

Unter einer unmittelbaren Verbindung der Grundkörperteile wird im Rahmen dieser Beschreibung und der beigefügten Ansprüche insbesondere eine Verbindung der Grundkörperteile unmittelbar miteinander verstanden, das heißt es ist insbesondere kein elastischer Dichtkörperteil zur Verbindung der Grundkörperteile vonnöten.

Bei einer Ausgestaltung der Erfindung ist vorgesehen, dass das Dichtelement mehrere identische Dichtelementbauteile und/oder mehrere identische Grundkörperteile und/oder mehrere identische elastische Dichtkörperteile umfasst.

Dabei ist es insbesondere denkbar, dass zwei oder mehrere, insbesondere alle, Dichtelementbauteile vollkommen identisch ausgebildet sind. Insbesondere sind dann sowohl die Grundkörperteile als auch die elastischen Dichtkörperteile ebenfalls vollkommen identisch ausgebildet.

Alternativ dazu ist es insbesondere möglich, dass zwar zwei oder mehrere, insbesondere alle, Grundkörperteile identisch ausgebildet sind, die elastischen Dichtkörperteile aber voneinander verschieden ausgebildet sind.

Alternativ dazu ist es möglich, dass die Grundkörperteile verschieden ausgebildet sind, wobei jedoch zwei oder mehrere, insbesondere alle, elastischen Dichtkörperteile identisch ausgebildet sind.

Idealerweise kann somit die für die Dichtungsanordnung benötigte Anzahl verschiedener Bauteile insgesamt reduziert werden, wobei die Dichtungsanordnung insgesamt kostengünstiger herstellbar ist. Vorzugsweise kann eine Dichtungsanordnung mit einem nach einem Baukastenprinzip herstellbaren Dichtelement bereitgestellt werden, so dass mittels eines Baukastens Dichtelemente in verschiedenen Geometrien realisierbar sind.

Es ist vorgesehen, dass die Grundkörperteile jeweils einen oder mehrere, insbesondere jeweils zwei, Verbindungsabschnitte zur Verbindung der Grundkörperteile miteinander umfassen.

Die Verbindungsabschnitte sind vorzugsweise einteilig mit den Grundkörperteilen ausgebildet.

Die Grundkörperteile sind mittels der Verbindungsabschnitte vorzugsweise formschlüssig verbindbar.

Insbesondere sind die Grundkörperteile mittels der Verbindungsabschnitte puzzleartig verbindbar.

Die Verbindungsabschnitte sind derart komplementär zueinander ausgebildet, dass sie formschlüssig ineinander eingreifen, wenn die Grundkörperteile miteinander verbunden sind.

Bei einer Ausgestaltung der Erfindung ist vorgesehen, dass die Grundkörperteile in einer Richtung senkrecht zu einer Haupterstreckungsebene des Dichtelements miteinander verbindbar, insbesondere steckverbindbar, sind.

Vorzugsweise sind die Grundkörperteile in einer Montagerichtung, welche insbesondere senkrecht zur Haupterstreckungsebene des Dichtelements verläuft, miteinander verbindbar.

Die Verbindungsabschnitte weisen insbesondere jeweils einen oder mehrere, insbesondere jeweils zwei, Hinterschnittabschnitte auf.

Vorzugsweise sind die Hinterschnittabschnitte derart ausgebildet, dass miteinander verbundene Grundkörperteile im Bereich der Verbindungsabschnitte in einer Richtung parallel zur Haupterstreckungsebene des Dichtelements gekoppelt, insbesondere formschlüssig verbunden, sind.

Vorzugsweise sind miteinander verbundene Grundkörperteile im Bereich der Verbindungsabschnitte in einer Richtung parallel zur Haupterstreckungsebene des Dichtelements insbesondere formschlüssig verankert.

Die Verbindungsabschnitte umfassen vorzugsweise jeweils eine Verbindungsabschnittsgeometrie, wobei zwei Verbindungsabschnitte jeweils derart komplementär zueinander ausgebildet sind, dass jeweils ein Verbindungsabschnitt eine Positivform der Verbindungsabschnittsgeometrie umfasst, wobei jeweils ein Verbindungsabschnitt eine Negativform der Verbindungsabschnittsgeometrie umfasst.

Vorzugsweise sind die Positivform und die Negativform der Verbindungsabschnittsgeometrie komplementär zueinander ausgebildet.

Die Positivform und/oder die Negativform der Verbindungsabschnittsgeometrie ist insbesondere eine Schwalbenschwanzgeometrie.

Günstig kann es insbesondere sein, wenn die Verbindungsabschnitte und/oder die Verbindungsabschnittsgeometrie symmetrisch zu einer Symmetrieebene ausgebildet sind.

Insbesondere korrespondieren jeweils nur zwei Verbindungsabschnitte einer Dichtungsanordnung miteinander.

Vorzugsweise sind jeweils nur zwei Verbindungsabschnitte komplementär zueinander ausgebildet, d.h. sie weisen eine zueinander komplementäre Verbindungsabschnittsgeometrie mit einer Positivform und einer dazu komplementären Negativform auf. Insbesondere sind verschiedene Verbindungsabschnittsgeometrien vorgesehen. Somit kann vermieden werden, dass die Grundkörperteile und/oder die Dichtelementbauteile falsch miteinander verbunden werden.

Vorzugsweise kann somit ein Dichtelement bereitgestellt werden, welches einfach herstellbar, insbesondere einfach montierbar, ist.

Es ist vorgesehen, dass ein Dichtelementbauteil jeweils einen einstückigen elastischen Dichtkörperteil und einen oder mehrere Grundkörperteile umfasst, wobei mehrere Grundkörperteile eines Dichtelementbauteils mittels des einstückigen elastischen Dichtkörperteils des jeweiligen Dichtelementbauteils miteinander verbunden sind.

Ein jeweiliges Dichtelementbauteil umfasst insbesondere nur einen einzigen einstückigen elastischen Dichtkörperteil.

Vorzugsweise sind sämtliche Grundkörperteile eines jeweiligen Dichtelementbauteils mittels des einzigen einstückigen elastischen Dichtkörperteils miteinander verbunden.

Mehrere Grundkörperteile eines jeweiligen Dichtelementbauteils sind beispielsweise durch Anspritzen des elastischen Dichtkörperteils an die Grundkörperteile miteinander verbunden.

Vorzugsweise sind dabei die Grundkörperteile eines jeweiligen Dichtelementbauteils verkleinerbar. Insbesondere sind die Grundkörperteile somit kostengünstig herstellbar, beispielsweise durch Stanzen und/oder Spritzgießen.

Bei einer Ausgestaltung der Erfindung ist vorgesehen, dass der elastische Dichtkörper eine oder mehrere Dichtlippen, insbesondere eine an einer Innenkante des Grundkörpers angeordnete Dichtlippe und/oder eine an einer äußeren Kante des Grundkörpers angeordnete Dichtlippe, umfasst.

Bei einer Ausgestaltung der Erfindung ist vorgesehen, dass die an einer Innenkante des Grundkörpers angeordnete Dichtlippe in einer Richtung senkrecht zu einer Haupterstreckungsebene des Dichtelements eine erste Dichtlippenhöhe aufweist und dass die an einer äußeren Kante des Grundkörpers angeordnete Dichtlippe in einer Richtung senkrecht zu einer Haupterstreckungsebene des Dichtelements eine zweite Dichtlippenhöhe aufweist, wobei die erste Dichtlippenhöhe größer ist als die zweite Dichtlippenhöhe.

Bei einer Ausgestaltung der Erfindung ist vorgesehen, dass die elastischen Dichtkörperteile jeweils einen oder zwei Koppelabschnitte zur Kopplung aneinander anliegender oder einander überlappender elastischer Dichtkörperteile umfassen.

Günstig kann es sein, wenn die Koppelabschnitte der elastischen Dichtkörperteile zweier miteinander verbundener Dichtelementbauteile aneinander anlegbar, insbesondere dichtend miteinander verbindbar, sind.

Der eine oder die zwei Koppelabschnitte eines elastischen Dichtkörperteils umfassen insbesondere einen Zentralkoppelabschnitt und einen oder mehrere, insbesondere zwei, Randkoppelabschnitte.

Mittels des einen oder der mehreren Randkoppelabschnitte ist vorzugsweise eine insbesondere dichte Kopplung der Dichtlippenabschnitte der elastischen Dichtkörperteile zweier miteinander verbundener Dichtelementbauteile realisierbar.

Beispielsweise ist es denkbar, dass der Zentralkoppelabschnitt zwischen zwei Randkoppelabschnitten angeordnet ist.

Der Koppelabschnitt eines elastischen Dichtkörperteils umfasst beispielsweise einen inneren Randkoppelabschnitt, einen Zentralkoppelabschnitt und einen äußeren Randkoppelabschnitt.

Bei einer Ausgestaltung der Erfindung ist vorgesehen, dass der eine oder die mehreren, insbesondere die zwei, Randkoppelabschnitte eines Koppelabschnitts jeweils eine oder mehrere Zusatzdichtlippen umfassen, insbesondere zum Abdichten im Bereich einer Stoßfuge.

Günstig kann es sein, wenn nur die zwei Randkoppelabschnitte eines einzelnen Koppelabschnitts eines elastischen Dichtkörperteils eines jeweiligen Dichtelementbauteils eine Zusatzdichtlippe umfassen.

Insbesondere umfassen die zwei Randkoppelabschnitte eines jeweils anderen Koppelabschnitts des elastischen Dichtkörperteils des jeweiligen Dichtelementbauteils keine Zusatzdichtlippe.

Vorzugsweise ist mittels der einen oder der mehreren Zusatzdichtlippen eine verbesserte Abdichtung im Bereich der Randkoppelabschnitte realisierbar.

Vorzugsweise sind Dichtlippenabschnitte verschiedener Dichtelementbauteile des Dichtelements mittels der Randkoppelabschnitte miteinander koppelbar, insbesondere dichtend.

Insbesondere ist es denkbar, dass Dichtlippenabschnitte einer an einer Innenkante des Grundkörpers angeordneten Dichtlippe mittels des inneren Randkoppelabschnitts miteinander koppelbar sind.

Günstig kann es ferner sein, wenn Dichtlippenabschnitte einer an einer äußeren Kante des Grundkörpers angeordneten Dichtlippe mittels des äußeren Randkoppelabschnitts miteinander koppelbar sind.

Günstig kann es sein, wenn die elastischen Dichtkörperteile im Koppelabschnitt, insbesondere im Zentralkoppelabschnitt, in einer senkrecht zu einer Haupterstreckungsebene des Dichtelements verlaufenden Richtung eine Höhe aufweisen, welche größer ist als eine Grundkörperhöhe des Grundkörpers in der senkrecht zu der Haupterstreckungsebene des Dichtelements verlaufenden Richtung.

Beispielsweise ist es denkbar, dass die elastischen Dichtkörperteile im Koppelabschnitt, insbesondere im Zentralkoppelabschnitt, in der senkrecht zu der Haupterstreckungsebene des Dichtelements verlaufenden Richtung eine Höhe aufweisen, welche mindestens ungefähr 5 %, vorzugsweise mindestens ungefähr 10 %, größer ist als die Grundkörperhöhe des Grundkörpers in der senkrecht zu der Haupterstreckungsebene des Dichtelements verlaufenden Richtung.

Beispielsweise ist es ferner denkbar, dass die elastischen Dichtkörperteile im Koppelabschnitt, insbesondere im Zentralkoppelabschnitt, in der senkrecht zu der Haupterstreckungsebene des Dichtelements verlaufenden Richtung eine Höhe aufweisen, welche höchstens ungefähr 20 %, vorzugsweise höchstens ungefähr 15 %, größer ist als die Grundkörperhöhe des Grundkörpers in der senkrecht zu der Haupterstreckungsebene des Dichtelements verlaufenden Richtung.

Die elastischen Dichtkörperteile weisen im Zentralkoppelabschnitt in der senkrecht zu der Haupterstreckungsebene des Dichtelements verlaufenden Richtung vorzugsweise eine Höhe auf, welche kleiner ist als eine Höhe einer oder mehrerer Dichtlippen des elastischen Dichtkörpers in der senkrecht zu der Haupterstreckungsebene des Dichtelements verlaufenden Richtung.

Insbesondere weisen die elastischen Dichtkörperteile im Zentralkoppelabschnitt in der senkrecht zu der Haupterstreckungsebene des Dichtelements verlaufenden Richtung eine Höhe auf, welche kleiner ist als eine Höhe der elastischen Dichtkörperteile in den Randkoppelabschnitten.

Vorzugsweise ist eine Höhe der elastischen Dichtkörperteile im Zentralkoppelabschnitt in der senkrecht zu der Haupterstreckungsebene des Dichtelements verlaufenden Richtung kleiner als eine Höhe einer an einer Innenkante des Grundkörpers angeordneten Dichtlippe und/oder kleiner als eine Höhe einer an einer äußeren Kante des Grundkörpers angeordneten Dichtlippe.

Eine Höhe der elastischen Dichtkörperteile in einer senkrecht zu der Haupterstreckungsebene des Dichtelements verlaufenden Richtung in dem einen oder in den mehreren Randkoppelabschnitten entspricht vorzugsweise einer Höhe einer jeweiligen Dichtlippe.

Die Koppelabschnitte sind insbesondere derart ausgebildet, dass die elastischen Dichtkörperteile im Bereich der Koppelabschnitte dichtend aneinander anliegen, wenn die Dichtelementbauteile und/oder die Grundkörperteile miteinander verbunden sind, insbesondere wenn das Dichtelement dichtend zwischen einem ersten Objekt und einem zweiten Objekt angeordnet ist.

Vorzugsweise weisen die Koppelabschnitte jeweils eine Koppelgeometrie auf.

Insbesondere weisen die Koppelabschnitte jeweils zweier elastischer Dichtkörperteile eine zueinander komplementäre Koppelgeometrie auf.

Dadurch, dass die elastischen Dichtkörperteile im Koppelabschnitt in einer senkrecht zu einer Haupterstreckungsebene des Dichtelements verlaufenden Richtung insbesondere eine Höhe aufweisen, welche größer ist als eine Grundkörperhöhe des Grundkörpers in der senkrecht zu der Haupterstreckungsebene des Dichtelements verlaufenden Richtung, kann vorzugsweise ermöglicht werden, dass die elastischen Dichtkörperteile zweier miteinander verbundener Dichtelementbauteile zumindest teilweise komprimierbar sind, wenn das Dichtelement zwischen zwei Objekten angeordnet wird.

Insbesondere sind dabei die Koppelgeometrien der Koppelabschnitte zweier elastischer Dichtkörperteile dichtend aneinander anlegbar.

Die Koppelgeometrie der Koppelabschnitte weist in Montagerichtung der Dichtungsbauteile und/oder der Grundkörperteile, das heißt in einer Richtung senkrecht zu einer Haupterstreckungsebene des Dichtelements, insbesondere keine Hinterschnitte auf. Somit sind die elastischen Dichtkörperteile vorzugsweise bei Montage oder Verbindung der Grundkörperteile in einer Richtung senkrecht oder schräg, das heißt quer, zur Haupterstreckungsebene dichtend aneinander anlegbar.

Vorzugsweise sind die Grundkörperteile mit daran angeordneten elastischen Dichtkörperteilen mittels der Verbindungsabschnitte in einer Richtung senkrecht zur Haupterstreckungsebene verbindbar, ohne dass eine Verbindung der Grundkörperteile von Hinterschnitten der Koppelgeometrie behindert wird.

Die Koppelgeometrie ist beispielsweise eine Fase oder eine Schrägfläche, das heißt eine schräg zur Haupterstreckungsebene angeordnete Fläche.

Alternativ oder ergänzend dazu ist denkbar, dass die Koppelgeometrie gestuft oder gewellt ausgebildet ist.

Bei einer Ausgestaltung der Erfindung ist vorgesehen, dass der elastische Dichtkörper an einer Kante oder an mehreren Kanten des Grundkörpers angeordnet ist.

Vorzugsweise ist der elastische Dichtkörper an einer vom Grundkörper umgebenen inneren Kante und/oder an einer den Grundkörper umgebenden äußeren Kante angeordnet.

Bei einem im Montagezustand der Dichtungsanordnung ringförmig geschlossenen Grundkörper des Dichtelements ist der elastische Dichtkörper vorzugsweise an einer Innenkante des Grundkörpers, insbesondere an einer umlaufenden Innenkante des Grundkörpers, angeordnet, jedoch insbesondere im Bereich der Grundkörperteile und/oder der elastischen Dichtkörperteile unterbrochen.

Der an einer Innenkante des Grundkörpers angeordnete elastische Dichtkörper umfasst oder bildet insbesondere eine an der Innenkante des Grundkörpers angeordnete Primärdichtlippe des elastischen Dichtkörpers.

Günstig kann es sein, wenn der elastische Dichtkörper bei einem im Montagezustand der Dichtungsanordnung ringförmig geschlossenen Grundkörper des Dichtelements an einer äußeren Kante des Grundkörpers, insbesondere an einer umlaufenden äußeren Kante des Grundkörpers, angeordnet, jedoch insbesondere im Bereich der Grundkörperteile und/oder der elastischen Dichtkörperteile unterbrochen ist.

Ein an einer äußeren Kante des Grundkörpers angeordneter elastischer Dichtkörper umfasst oder bildet insbesondere eine an der äußeren Kante des Grundkörpers angeordnete Sekundärdichtlippe des elastischen Dichtkörpers.

Es ist insbesondere denkbar, dass der elastische Dichtkörper auch an einer den Grundkörper des Dichtelements umgebenden äußeren Kante des Grundkörpers angeordnet ist.

Vorzugsweise sind die elastischen Dichtkörperteile insbesondere durch Spritzgießen an einer Kante der Grundkörperteile angeordnet (sogenanntes edge-molding).

Bei einer Ausgestaltung der Erfindung ist vorgesehen, dass die elastischen Dichtkörperteile sich jeweils entlang einer Kante eines Grundkörperteils, insbesondere entlang einer Kante eines Stoßbereichs der Grundkörperteile, erstrecken.

Vorzugsweise erstrecken sich die elastischen Dichtkörperteile insbesondere auch entlang einer Kante der Verbindungsabschnitte der Grundkörperteile. Insbesondere folgt ein Verlauf der elastischen Dichtkörperteile dabei im Bereich eines Verbindungsabschnitts der Verbindungsabschnittsgeometrie.

Die elastischen Dichtkörperteile sind vorzugsweise an einer Positivform und/oder an einer Negativform der Verbindungsabschnittsgeometrie der Verbindungsabschnitte angeordnet.

Insbesondere ist dabei sowohl an der Positivform als auch an der Negativform der Verbindungsabschnittsgeometrie der Verbindungsabschnitte jeweils ein elastischer Dichtkörperteil angeordnet.

Alternativ dazu ist denkbar, dass nur an der Positivform oder nur an der Negativform der Verbindungsabschnittsgeometrie der Verbindungsabschnitte ein elastischer Dichtkörperteil angeordnet ist.

Die elastischen Dichtkörperteile sind insbesondere an einem Stoßbereich der Grundkörperteile angeordnet und bilden dort vorzugsweise eine Stoßfuge.

Unter einem Stoßbereich der Grundkörperteile wird im Rahmen dieser Beschreibung und der beigefügten Ansprüche insbesondere ein Fügebereich der Grundkörperteile verstanden.

Somit ist es denkbar, dass im Stoßbereich der Grundkörperteile an nur einem Grundkörperteil ein elastischer Dichtkörperteil angeordnet ist.

Alternativ dazu ist denkbar, dass im Stoßbereich der Grundkörperteile an beiden Grundkörperteilen jeweils ein elastischer Dichtkörperteil angeordnet ist, wobei die beiden elastischen Dichtkörperteile eine zueinander komplementäre Koppelgeometrie aufweisen.

Beispielsweise ist es denkbar, dass jedem Grundkörperteil ein elastischer Dichtkörperteil zugeordnet ist. Somit entspricht die Anzahl der Dichtkörperteile insbesondere der Anzahl der Grundkörperteile.

Bei einer Ausgestaltung der Erfindung ist vorgesehen, dass die elastischen Dichtkörperteile der Dichtelementbauteile jeweils einen oder mehrere, beispielsweise zwei, Positioniervorsprünge umfassen.

Vorzugsweise ragen die Positioniervorsprünge eines elastischen Dichtkörperteils eines Dichtelementbauteils über den Grundkörper des Dichtelementbauteils weg, insbesondere in einer senkrecht zu einer Haupterstreckungsebene des Dichtelements verlaufenden Richtung.

Sämtliche Positioniervorsprünge eines elastischen Dichtkörperteils eines Dichtelementbauteils ragen vorzugsweise auf derselben Seite des Dichtelementbauteils über den Grundkörper des Dichtelementbauteils weg.

Günstig kann es sein, wenn die Dichtelementbauteile und/oder das Dichtelement mittels der Positioniervorsprünge relativ zu dem ersten Objekt und/oder relativ zu dem zweiten Objekt positionierbar sind.

Vorzugsweise sind die Dichtelementbauteile zur Positionierung derselben relativ zu dem ersten Objekt und/oder relativ zu dem zweiten Objekt und/oder relativ zu weiteren Dichtelementbauteilen aufgrund der Positioniervorsprünge des elastischen Dichtkörperteils eines jeweiligen Dichtelementbauteils in einer parallel zu einer Haupterstreckungsebene des Dichtelements verlaufenden Richtung bewegbar.

Bei einer Ausgestaltung der Erfindung ist vorgesehen, dass der Grundkörper in einer Richtung senkrecht zur Haupterstreckungsebene des Dichtelements eine konstante Grundkörperhöhe aufweist.

Die Grundkörperhöhe ist insbesondere gleichmäßig, d.h. der Grundkörper weist in Höhenrichtung vorzugsweise eine gleichmäßige Höhe auf.

Beispielsweise weist der Grundkörper eine Grundkörperhöhe im Bereich von 1 bis 3 mm, insbesondere im Bereich von 1,5 bis 2 mm auf.

Bei einer Ausgestaltung der Erfindung ist vorgesehen, dass der elastische Dichtkörper ein Elastomermaterial umfasst oder aus einem Elastomermaterial gebildet ist, wobei das Elastomermaterial vorzugsweise ein Ethylen-Acrylat-Kautschuk (AEM), ein Ethylen-Propylen-Dien-Kautschuk (EPDM), ein Acrylat-Kautschuk (ACM), ein Fluorkautschuk (FKM), ein Hydrierter Acrylnitrilbutadien-Kautschuk (HNBR), ein Flüssig-Silikon, insbesondere Liquid Silicone Rubber (LSR), oder ein Silikon-Kautschuk (MVQ), insbesondere ein Vinyl-Methyl-Polysiloxan, ist.

Günstig kann es sein, wenn das Elastomermaterial eine Mischung eines oder mehrerer der oben genannten Kautschukmaterialien umfasst.

Bei einer Ausgestaltung der Erfindung ist vorgesehen, dass der Grundkörper aus einem metallischen Grundkörpermaterial hergestellt ist oder ein metallisches Grundkörpermaterial umfasst, wobei das metallische Grundkörpermaterial insbesondere Stahl oder Aluminium ist.

Alternativ hierzu ist ferner denkbar, dass der Grundkörper aus einem Kunststoff-Grundkörpermaterial hergestellt ist oder ein Kunststoff-Grundkörpermaterial umfasst. Günstig kann es beispielsweise sein, wenn das Kunststoff-Grundkörpermaterial ein faserverstärktes Kunststoffmaterial ist, beispielsweise ein glasfaserverstärktes Kunststoffmaterial.

Vorzugsweise umfasst das Kunststoff-Grundkörpermaterial Polyphenylensulfid (PPS), insbesondere faserverstärktes Polyphenylensulfid (PPS), Polyamid 6 (PA6) und/oder Polyamid 6.6 (PA6.6) oder ist aus diesem hergestellt.

Bei einer Ausgestaltung der Erfindung ist vorgesehen, dass der Grundkörper und/oder die Grundkörperteile durch Stanzen und/oder durch Laserschneiden und/oder durch Wasserstrahlschneiden und/oder durch manuelles Schneiden hergestellt sind oder dass der Grundkörper und/oder die Grundkörperteile durch Spritzgießen hergestellt sind.

Wenn der Grundkörper aus einem Kunststoff-Grundkörpermaterial hergestellt ist oder ein Kunststoff-Grundkörpermaterial umfasst, ist es denkbar, dass der Grundkörper, insbesondere die Grundkörperteile des Grundkörpers, in einem ersten Herstellungsschritt mittels eines Spritzgussverfahrens aus einem Kunststoff-Grundkörpermaterial hergestellt werden, wobei anschließend der elastische Dichtkörper, insbesondere die Dichtkörperteile des elastischen Dichtkörpers, an den Grundkörper angespritzt werden.

Beispielsweise ist es denkbar, dass die Dichtelementbauteile des Dichtelements in einem Zwei-Komponenten-Spritzgussverfahren hergestellt werden.

Insbesondere werden dabei zunächst die Grundkörperteile aus einem ersten Kunststoffmaterial mittels eines Spritzgussverfahrens hergestellt, wobei anschließend die Dichtkörperteile aus einem zweiten Kunststoffmaterial an die Grundkörperteile angespritzt werden.

Dabei ist es denkbar, dass die Grundkörperteile und die elastischen Dichtkörperteile in demselben Spritzgusswerkzeug hergestellt werden.

Günstig kann es ferner sein, wenn die Grundkörperteile und die elastischen Dichtkörperteile in voneinander verschiedenen Spritzgusswerkzeugen hergestellt werden.

Ferner ist es denkbar, dass die Grundkörperteile in einer ersten Kavität eines Spritzgusswerkzeugs hergestellt werden, wobei die elastischen Dichtkörperteile anschließend in einer zweiten Kavität desselben Spritzgusswerkzeugs hergestellt werden, beispielsweise durch Wechseln eines oder mehrerer Formteile des Spritzgusswerkzeugs. Alternativ oder ergänzend hierzu ist insbesondere denkbar, dass der Grundkörper und/oder die Grundkörperteile durch Spritzgießen hergestellt sind, insbesondere wenn der Grundkörper aus einem Kunststoffmaterial hergestellt ist.

Vorzugsweise sind der Grundkörper und/oder die Grundkörperteile vollständig durch Stanzen und/oder Laserschneiden aus einem Blechmaterial hergestellt.

Insbesondere werden dabei keine weiteren Verfahrensschritte zur Herstellung des Grundkörpers und/oder der Grundkörperteile durchgeführt.

Vorzugsweise sind somit auch die Verbindungsabschnitte der Grundkörperteile durch Stanzen und/oder Laserschneiden hergestellt.

Die Erfindung betrifft ferner einen Batterie- oder Steuerungskasten.

Unter einem Batteriekasten wird im Rahmen dieser Beschreibung und der beigefügten Ansprüche insbesondere ein Gehäuse für eine oder mehrere Batterien, insbesondere Batterien eines Elektro-Kraftfahrzeugs, verstanden.

Unter einem Steuerungskasten wird im Rahmen dieser Beschreibung und der beigefügten Ansprüche insbesondere ein Gehäuse für ein oder mehrere Steuerungsbauteile und/oder eine oder mehrere Steuervorrichtungen verstanden.

Der Erfindung liegt daher die weitere Aufgabe zugrunde, einen Batterie- oder Steuerungskasten bereitzustellen, bei welchem ein Dichtelement einfach und sicher montiert ist und somit ein erster Fluidraum zuverlässig von einem zweiten Fluidraum abgedichtet werden kann.

Diese Aufgabe wird durch einen Batterie- oder Steuerungskasten mit den Merkmalen des Anspruchs 19 gelöst.

Der Batterie- oder Steuerungskasten umfasst eine Dichtungsanordnung nach einem der Ansprüche 1 bis 18.

Das Dichtelement ist dabei insbesondere dichtend zwischen einem Kastengrundteil und einem Kastendeckel angeordnet.

Die Erfindung betrifft ferner ein Kraftfahrzeug.

Der Erfindung liegt daher die weitere Aufgabe zugrunde, ein Kraftfahrzeug bereitzustellen, bei welchem ein Dichtelement einfach und sicher montiert ist und somit ein erster Fluidraum zuverlässig von einem zweiten Fluidraum abgedichtet werden kann.

Diese Aufgabe wird durch ein Kraftfahrzeug mit den Merkmalen des Anspruchs 20 gelöst.

Das Kraftfahrzeug umfasst eine oder mehrere Dichtungsanordnungen nach einem der Ansprüche 1 bis 18, insbesondere einen Batterie- oder Steuerungskasten nach Anspruch 19.

Die Erfindung betrifft ferner ein Verfahren zur Herstellung einer Dichtungsanordnung zur Abdichtung eines ersten Fluidraums von einem zweiten Fluidraum oder mehreren Fluidräumen.

Der Erfindung liegt daher die Aufgabe zugrunde, ein Verfahren zur Herstellung einer Dichtungsanordnung bereitzustellen, mit welchem eine Dichtungsanordnung einfach und kostengünstig herstellbar ist, welche eine zuverlässige Abdichtung eines ersten Fluidraums von einem zweiten Fluidraum ermöglicht.

Diese Aufgabe wird durch ein Verfahren mit den Merkmalen des Anspruchs 15 gelöst.

Das Verfahren umfasst Folgendes: Bereitstellen mehrerer Dichtelementbauteile, welche jeweils einen Grundkörperteil und einem am Grundkörperteil angeordneten elastischen Dichtkörperteil umfassen; mittelbares oder unmittelbares Verbinden, insbesondere puzzleartiges Verbinden und/oder formschlüssiges Verbinden, der Dichtelementbauteile miteinander.

Die Dichtelementbauteile werden vorzugsweise mittelbar oder unmittelbar miteinander derart verbunden, dass sich die Dichtelementbauteile gemeinsam zu dem Dichtelement ergänzen.

Günstig kann es dabei sein, wenn die Dichtelementbauteile in einer Umfangsrichtung zumindest teilweise aneinander anliegen, insbesondere in einem Stoßbereich zwischen zwei Dichtelementbauteilen.

Günstig kann es ferner sein, wenn die Dichtelementbauteile in einer Umfangsrichtung auf Stoß aneinander anliegen, insbesondere in einem Stoßbereich zwischen zwei Dichtelementbauteilen.

Wenn die Dichtelementbauteile mittelbar mittels eines oder mehrerer zusätzlicher Bauteile miteinander verbunden werden, kann vorgesehen sein, dass die mittelbar miteinander verbundenen Dichtelementbauteile sich in einem Stoßbereich gegenseitig nicht hinterschneiden. Die Dichtelementbauteile sind dabei insbesondere nicht unmittelbar formschlüssig miteinander verbunden.

Günstig kann es sein, wenn die verbundenen Dichtelementbauteile ein vorzugsweise geschlossenes, insbesondere ringförmig geschlossenes, Dichtelement bilden.

Insbesondere werden die Verfahrensschritte in der angegebenen Reihenfolge durchgeführt.

Vorzugsweise ist jedes einzelne bereitgestellte Dichtelementbauteil kleiner und/oder kürzer als das Dichtelement, welches im verbundenen Zustand der Dichtelementbauteile durch die Dichtelementbauteile gebildet wird.

Günstig kann es sein, wenn ein oder mehrere, insbesondere alle, bereitgestellten Dichtelementbauteile in einer Haupterstreckungsebene jeweils für sich genommen geringere Abmessungen aufweisen als das fertiggestellte Dichtelement, wenn dieses im verbundenen Zustand der Dichtelementbauteile durch die Dichtelementbauteile gebildet wird.

Günstig kann es sein, wenn die Abmessungen eines oder mehrerer, insbesondere aller, bereitgestellter Dichtelementbauteile in einer, zwei oder allen drei Raumrichtungen jeweils kleiner sind als die Abmessungen des Dichtelements als Ganzes, wenn dieses im verbundenen Zustand der Dichtelementbauteile durch die Dichtelementbauteile gebildet wird.

Es ist vorgesehen, dass die Dichtelementbauteile als voneinander separate Bauteile hergestellt werden, wobei jeweils ein elastischer Dichtkörperteil an mehrere Grundkörperteile in einem Spritzgussprozess angespritzt wird oder wobei jeweils ein elastischer Dichtkörperteil mit mehreren Grundkörperteilen mittels Compression Molding oder mittels Compression Transfer Molding verbunden wird.

Beim Herstellen der Grundkörperteile werden Verbindungsabschnitte zum formschlüssigen Verbinden der Grundkörperteile hergestellt.

Der Grundkörper und/oder die Grundkörperteile werden insbesondere durch Stanzen und/oder durch Laserschneiden, insbesondere aus einem Blechmaterial, hergestellt.

Vorzugsweise werden die elastischen Dichtkörperteile an eine Kante der Grundkörperteile angespritzt.

Weitere bevorzugte Merkmale und/oder Vorteile der Erfindung sind Gegenstand der nachfolgenden Beschreibung und der zeichnerischen Darstellung von Ausführungsbeispielen.

In den Zeichnungen zeigen:
- Fig. 1: eine schematische perspektivische Darstellung einer Dichtungsanordnung, welche eine Ausführungsform eines Dichtelements umfasst;
- Fig. 2: eine vergrößerte Darstellung des Bereichs II in Fig. 1;
- Fig. 3: eine schematische Draufsicht von oben auf die Ausführungsform des Dichtelements aus Fig. 1;
- Fig. 4: eine schematische Seitenansicht der Ausführungsform des Dichtelements aus Fig. 3 mit Blickrichtung in Richtung des Pfeils 4 in Fig. 3;
- Fig. 5: einen schematischen Schnitt durch die Ausführungsform des Dichtelements aus Fig. 3 längs der Linie V-V in Fig. 3;
- Fig. 6: eine vergrößerte Darstellung des Bereichs VI aus Fig. 5 mit einem ersten Ausführungsbeispiel eines Koppelabschnitts;
- Fig. 7: eine der Fig. 6 entsprechende Darstellung eines zweiten Ausführungsbeispiels des Koppelabschnitts;
- Fig. 8: eine der Fig. 6 entsprechende Darstellung eines dritten Ausführungsbeispiels des Koppelabschnitts;
- Fig.9: eine schematische perspektivische Darstellung eines Ausschnitts einer weiteren Ausführungsform eines Dichtelements einer Dichtungsanordnung von oben;
- Fig. 10: eine schematische perspektivische Darstellung eines Ausschnitts der Ausführungsform des Dichtelements aus Fig. 9 von unten;
- Fig. 11: eine vergrößerte Darstellung des Bereichs XI in Fig. 9;
- Fig. 12: eine schematische Draufsicht auf die Ausführungsform des Dichtelements aus Fig. 9 mit Blickrichtung in Richtung des Pfeils 12 in Fig. 11;
- Fig. 13: einen schematischen Schnitt durch die Ausführungsform des Dichtelements aus Fig. 9 längs der Linie XIII-XIII in Fig. 12;
- Fig. 14: eine schematische perspektivische Darstellung eines Koppelabschnitts eines Dichtelementbauteils der Ausführungsform des Dichtelements aus Fig. 9;
- Fig. 15: eine vergrößerte Darstellung des Bereichs XV in Fig. 14;
- Fig. 16: eine vergrößerte Darstellung des Bereichs XVI in Fig. 14;
- Fig. 17: eine schematische Draufsicht auf einen weiteren Koppelabschnitt eines Dichtelementbauteils der Ausführungsform des Dichtelements aus Fig. 9;
- Fig. 18: eine schematische perspektivische Darstellung einer weiteren Ausführungsform eines Dichtelements einer Dichtungsanordnung von oben;
- Fig. 19: eine schematische perspektivische Darstellung der Ausführungsform des Dichtelements aus Fig. 18 von unten;
- Fig. 20: eine schematische perspektivische Darstellung eines Dichtelementbauteils der Ausführungsform des Dichtelements aus Fig. 18;
- Fig. 21: einen schematischen Schnitt durch das Dichtelementbauteil aus Fig. 20 längs der Linie XXI-XXI in Fig. 20;
- Fig. 22: eine schematische perspektivische Darstellung eines Koppelabschnitts eines Dichtelementbauteils der Ausführungsform des Dichtelements aus Fig. 18;
- Fig. 23: eine vergrößerte Darstellung des Bereichs XXIII in Fig. 22; und
- Fig. 24: eine vergrößerte Darstellung des Bereichs XIV in Fig. 22.

Gleiche oder funktional äquivalente Elemente sind in sämtlichen Figuren mit denselben Bezugszeichen versehen.

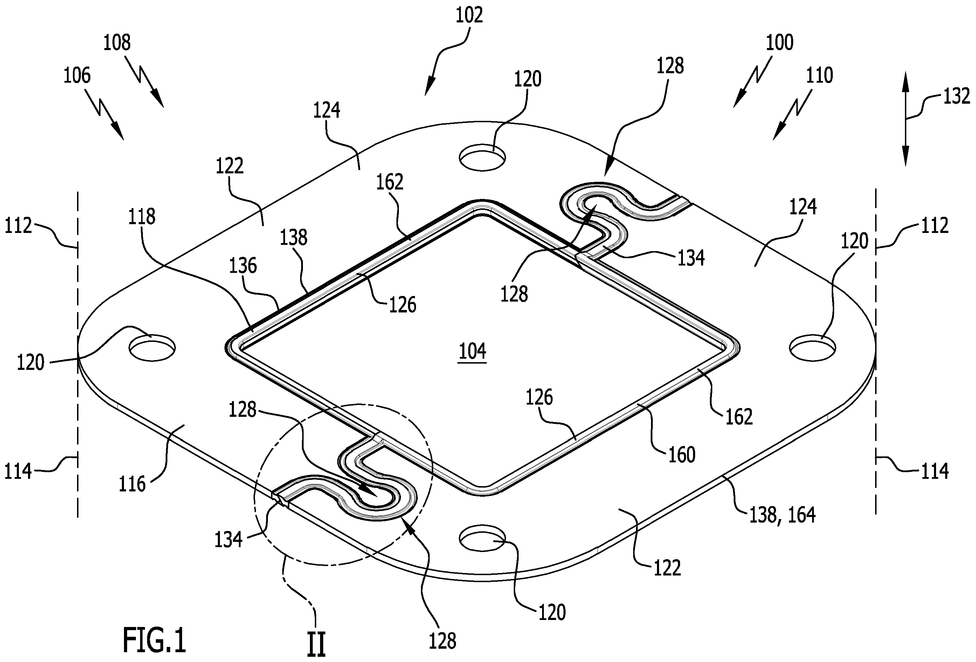

Fig. 1 zeigt eine als Ganzes mit 100 bezeichnete Dichtungsanordnung.

Die Dichtungsanordnung 100 dient insbesondere zur Abdichtung eines ersten Fluidraums 102 von einem zweiten Fluidraum 104, beispielsweise in einem Batterie- oder Steuerungskasten 106 eines Kraftfahrzeugs 108, insbesondere eines Elektro-Kraftfahrzeugs.

Die Dichtungsanordnung 100 umfasst eine in den Fig. 1 bis 8 dargestellte Ausführungsform eines Dichtelements 110 zur Anordnung zwischen einem ersten Objekt 112, beispielsweise einem Kastendeckel des Batterie- oder Steuerungskastens 106, und einem zweiten Objekt 114, beispielsweise einem Kastengrundteil des Batterie- oder Steuerungskastens 106.

Das Dichtelement 110 umfasst einen vorzugsweise formstabilen Grundkörper 116 und einen am Grundkörper 116 angeordneten elastischen Dichtkörper 118.

Das Dichtelement 110 ist somit insbesondere eine sogenannte Trägerdichtung, insbesondere eine Kunststoff-Trägerdichtung, und/oder eine sogenannte Metall-Elastomer-Dichtung.

Am Grundkörper 116 umfasst das Dichtelement 110 insgesamt vier Durchgangsöffnungen 120, durch welche jeweils ein Verbindungselement, insbesondere eine Schraube, zur Verbindung des ersten Objekts 112 mit dem zweiten Objekt 114 hindurchgesteckt werden kann.

Das Dichtelement 110 umfasst zwei unmittelbar miteinander verbindbare oder, wie in Fig. 1 gezeigt, verbundene Dichtelementbauteile 122.

Die Dichtelementbauteile 122 umfassen jeweils einen Grundkörperteil 124 und einen am Grundkörperteil 124 angeordneten elastischen Dichtkörperteil 126.

Die Grundkörperteile 124 der Dichtelementbauteile 122 bilden den Grundkörper 116 und stellen somit eine lasttragende Funktion des Dichtelements 110 bereit.

Die elastischen Dichtkörperteile 126 der Dichtelementbauteile 122 bilden den elastischen Dichtkörper 118 und stellen somit eine Dichtfunktion des Dichtelements 110 bereit.

Die Grundkörperteile 124 des Grundkörpers 116 umfassen insbesondere jeweils zwei Verbindungsabschnitte 128 zur gegenseitigen Verbindung der Grundkörperteile 124 miteinander.

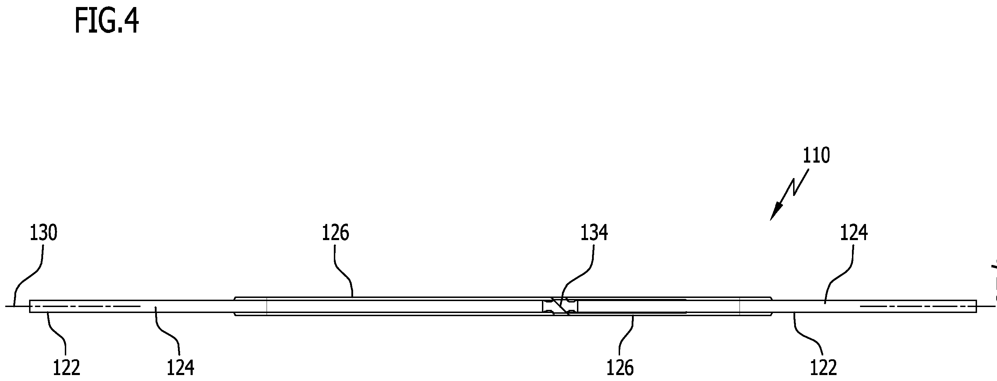

Die Grundkörperteile 124 sind vorzugsweise in einer Richtung senkrecht zu einer in Fig. 4 gezeigten Haupterstreckungsebene 130 des Dichtelements 110, insbesondere in einer Montagerichtung 132, miteinander verbindbar, insbesondere steckverbindbar.

Der elastische Dichtkörper 118 und/oder die elastischen Dichtkörperteile 126 umfassen vorzugsweise ein Elastomermaterial 133 oder sind aus einem Elastomermaterial 133 gebildet. Das Elastomermaterial 133 ist insbesondere ein Ethylen-Acrylat-Kautschuk (AEM). Alternativ oder ergänzend dazu ist das Elastomermaterial 133 ein Ethylen-Propylen-Dien-Kautschuk (EPDM), ein Acrylat-Kautschuk (ACM), ein Fluorkautschuk (FKM), ein Hydrierter Acrylnitrilbutadien-Kautschuk (HNBR), ein Flüssig-Silikon, insbesondere Liquid Silicone Rubber (LSR), oder ein Silikon-Kautschuk (MVQ), insbesondere ein Vinyl-Methyl-Polysiloxan.

Der Grundkörper 116 und/oder die Grundkörperteile 124 sind insbesondere aus einem metallischen Grundkörpermaterial 135 hergestellt oder umfassen ein metallisches Grundkörpermaterial 135. Das metallische Grundkörpermaterial 135 ist insbesondere Stahl oder Aluminium.

Alternativ oder ergänzend hierzu ist es denkbar, dass der Grundkörper 116 und/oder die Grundkörperteile 124 aus einem Kunststoff-Grundkörpermaterial hergestellt sind oder ein Kunststoff-Grundkörpermaterial umfassen.

Vorzugsweise sind der Grundkörper 116 und/oder die Grundkörperteile 124 vollständig durch Stanzen und/oder Laserschneiden aus einem metallischen Grundkörpermaterial 135, beispielsweise aus einem Blechmaterial, hergestellt, so dass insbesondere keine weiteren Verfahrensschritte zur Herstellung des Grundkörpers 116 und/oder der Grundkörperteile 124 durchgeführt werden müssen.

Vorzugsweise werden dabei auch die Verbindungsabschnitte 128 der Grundkörperteile 124 durch Stanzen und/oder Laserschneiden hergestellt.

Die elastischen Dichtkörperteile 126 des elastischen Dichtkörpers 118 werden bei der Herstellung der in den Fig. 1 bis 8 dargestellten Ausführungsform des Dichtelements 110 vorzugsweise in einem Spritzgussprozess an jeweils einen Grundkörperteil 124 angespritzt. Beim Anspritzen der elastischen Dichtkörperteile 126 an die Grundkörperteile 124 werden die elastischen Dichtkörperteile 126 verschiedener Dichtelementbauteile 122 insbesondere nicht miteinander verbunden.

In dem Spritzgussprozess werden insbesondere lediglich die einzelnen elastischen Dichtkörperteile 126 an die Grundkörperteile 124 angespritzt und somit die Dichtelementbauteile 122 gebildet.

Bei der in den Fig. 1 bis 8 dargestellten Ausführungsform des Dichtelements 110 sind die Dichtelementbauteile 122 bereits mittels der Verbindungsabschnitte 128 miteinander verbunden.

Der Grundkörper 116 des Dichtelements 110 ist dabei vorzugsweise ringförmig, insbesondere ringförmig geschlossen, ausgebildet.

Da der Grundkörper 116 und/oder die Grundkörperteile 124 insbesondere aus einem zumindest näherungsweise unflexiblen oder steifen Material, vorzugsweise aus einem metallischen Grundkörpermaterial 135, hergestellt sind, kann vom Grundkörper 116 insbesondere die lasttragende Funktion des Dichtelements 110 bereitgestellt werden.

Wie in den Fig. 1 und 4 bis 8 deutlich zu erkennen ist, sind das Dichtelement 110 und/oder der Grundkörper 116 vorzugsweise flächig ausgebildet.

Das Dichtelement 110 und/oder der Grundkörper 116 erstrecken sich dabei insbesondere zumindest näherungsweise entlang der Haupterstreckungsebene 130 (vergl. Fig. 4).

Zur Herstellung der in den Fig. 1 bis 8 dargestellten ringförmig geschlossenen Form des Grundkörpers 116 sind die Dichtelementbauteile 122 miteinander verbindbar, insbesondere puzzleartig und/oder formschlüssig.

Eine puzzleartige Verbindung der Dichtelementbauteile 122 erfolgt insbesondere durch die Verbindungsabschnitte 128 der Grundkörperteile 124.

Die insbesondere lösbar miteinander verbindbaren Dichtelementbauteile 122 sind vorzugsweise mittelbar oder unmittelbar miteinander verbindbar, insbesondere an einem Stoßbereich 134 der Grundkörperteile 124.

Bei der in den Fig. 1 bis 8 dargestellten Ausführungsform des Dichtelements 110 sind die Grundkörperteile 124 mittelbar über die an den Grundkörperteilen 124 angeordneten elastischen Dichtkörperteile 126 miteinander verbunden.

Hierzu sind die elastischen Dichtkörperteile 126 vorzugsweise nicht nur an eine umlaufenden Innenkante 136 des Grundkörpers 116 angespritzt.

Vielmehr sind die elastischen Dichtkörperteile 126 auch an eine Kante 138 des Grundkörpers 116 bzw. der Grundkörperteile 124 im Bereich der Verbindungsabschnitte 128 angespritzt.

Es ist jedoch auch denkbar, die Grundkörperteile 124 im Stoßbereich 134 unmittelbar miteinander zu verbinden und somit die elastischen Dichtkörperteile 126 lediglich an der Innenkante 136 des ringförmig geschlossenen Grundkörpers 116 vorzusehen.

Die Fig. 1 bis 8 zeigen, dass die Grundkörperteile 124 mittels der Verbindungsabschnitte 128 vorzugsweise puzzleartig und/oder formschlüssig miteinander verbindbar sind.

Die Verbindungsabschnitte 128 sind insbesondere derart komplementär ausgebildet, dass die Verbindungsabschnitte 128 und/oder die an diesen angeordneten elastischen Dichtkörperteile 126 formschlüssig ineinander eingreifen, wenn die Grundkörperteile 124 in Montagerichtung 132 miteinander verbunden werden.

Zur gegenseitigen Verbindung der Grundkörperteile 124 weisen die Verbindungsabschnitte 128 insbesondere jeweils zwei Hinterschnittabschnitte 140 auf.

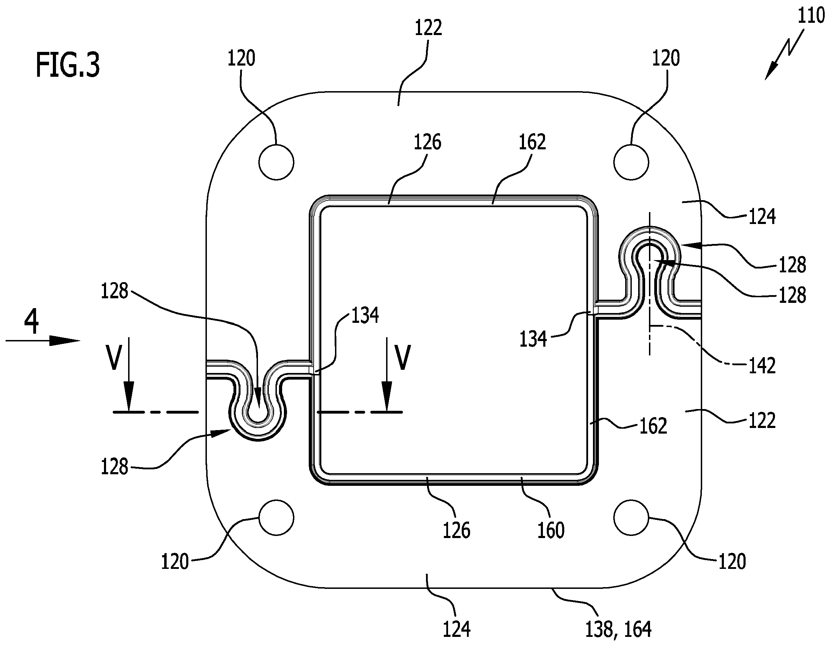

Wie in Fig. 3 ferner zu erkennen ist, sind die Verbindungsabschnitte 128 vorzugsweise symmetrisch zu einer Symmetrieebene 142 ausgebildet.

Die Hinterschnittabschnitte 140 sind insbesondere derart angeordnet und ausgebildet, dass miteinander verbundene Grundkörperteile 124 im Bereich der Verbindungsabschnitte 128 in einer Richtung parallel zur Haupterstreckungsebene 130 des Dichtelements 110 gekoppelt, insbesondere formschlüssig verbunden, sind.

Hierzu hinterschneiden sich die Hinterschnittabschnitte 140 in einer parallel zur Symmetrieebene 142 verlaufenden Richtung.

Miteinander verbundene Grundkörperteile 124 sind daher im Bereich der Verbindungsabschnitte 128 in einer Richtung parallel zur Haupterstreckungsebene 130 des Dichtelements 110 insbesondere formschlüssig verankert.

Die Verbindungsabschnitte 128 umfassen vorzugsweise jeweils eine Verbindungsabschnittsgeometrie 144.

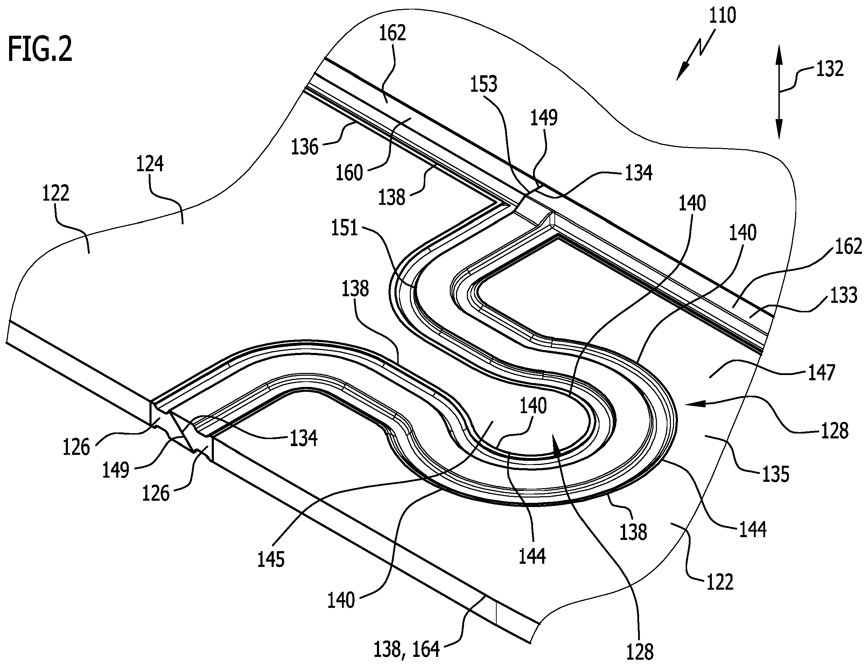

Zwei Verbindungsabschnitte 128 sind insbesondere jeweils derart komplementär zueinander ausgebildet, dass jeweils ein Verbindungsabschnitt 128 eine Positivform 145 der Verbindungsabschnittsgeometrie 144 umfasst, wobei jeweils ein Verbindungsabschnitt 128 eine Negativform 147 der Verbindungsabschnittsgeometrie 144 umfasst (vergl. Fig. 2).

Bei der in den Fig. 1 bis 8 dargestellten Ausführungsform des Dichtelements 110 ist die Verbindungsabschnittsgeometrie 144 insbesondere puzzleartig ausgebildet.

Alternativ dazu ist denkbar, dass die Verbindungsabschnittsgeometrie 144, das heißt die Positivform 145 und/oder die Negativform 147, insbesondere eine Schwalbenschwanzgeometrie aufweisen.

Um eine Montage des Dichtelements 110 erleichtern zu können ist insbesondere vorgesehen, dass jeweils nur zwei Verbindungsabschnitte 128 miteinander korrespondieren, d.h. dass jeweils nur zwei Verbindungsabschnitte 128 eine zueinander komplementäre Verbindungsabschnittsgeometrie 144 umfassen.

Insbesondere ist für zu verbindende Dichtelementbauteile 122 und/oder zu verbindende Grundkörperteile 124 jeweils nur eine Verbindungsabschnittsgeometrie 144 vorgesehen, d.h. Positivform 145 und Negativform 147 der Verbindungsabschnitte 128 sind komplementär zueinander ausgebildet. Somit können Dichtelementbauteile 122 und/oder Grundkörperteile 124 insbesondere nicht falsch miteinander verbunden werden.

Wie in den Fig. 1 bis 8 ferner zu erkennen ist, sind die elastischen Dichtkörperteile 126 im Stoßbereich 134 vorzugsweise unterbrochen und bilden dort eine Stoßfuge 149 (vergl. Fig. 2).

Die elastischen Dichtkörperteile 126 erstrecken sich daher insbesondere jeweils entlang einer Kante 138 eines jeweiligen Grundkörperteils 124.

Wie oben erwähnt, erstrecken sich die elastischen Dichtkörperteile 126 bei der in den Fig. 1 bis 8 dargestellten Ausführungsform des Dichtelements 110 entlang der Innenkante 136 sowie entlang einer Kante 138 der Verbindungsabschnitte 128 der Grundkörperteile 124.

Insbesondere folgt ein Verlauf der elastischen Dichtkörperteile dabei im Bereich der Verbindungsabschnitte 128 der Verbindungsabschnittsgeometrie 144.

Bei der in den Fig. 1 bis 8 dargestellten Ausführungsform des Dichtelements 110 sind die elastischen Dichtkörperteile 126 sowohl an der Positivform 145 als auch an der Negativform 147 der Verbindungsabschnittsgeometrie 144 der Verbindungsabschnitte 128 angeordnet, das heißt sowohl an der Positivform 145 als auch an der Negativform 147 ist jeweils ein elastischer Dichtkörperteil 126 angeordnet.

Alternativ dazu ist es denkbar, dass nur an der Positivform 145 oder nur an der Negativform 147 der Verbindungsabschnittsgeometrie 144 der Verbindungsabschnitte 128 ein elastischer Dichtkörperteil 126 angeordnet ist.

Wenn im Stoßbereich 134 der Grundkörperteile 124 jeweils an beiden Grundkörperteilen 124 ein elastischer Dichtkörperteil 126 angeordnet ist, umfassen die elastischen Dichtkörperteile 126 insbesondere jeweils einen Koppelabschnitt 146 zur Kopplung aneinander anliegender oder einander überlappender elastischer Dichtkörperteile 126.

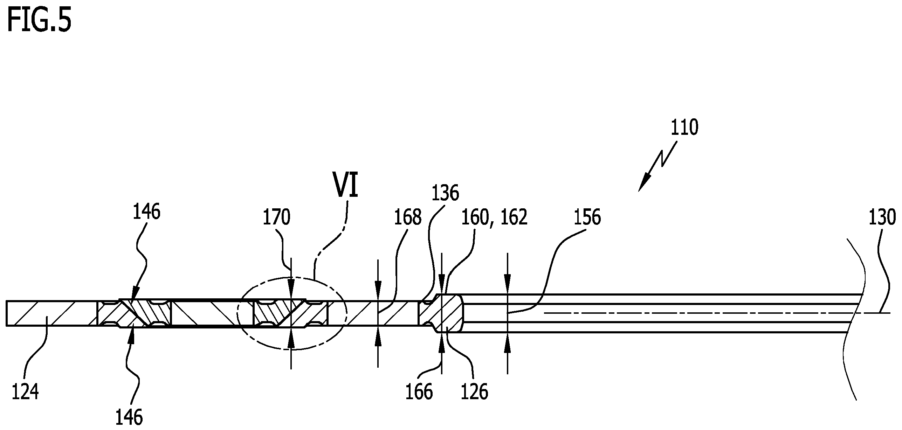

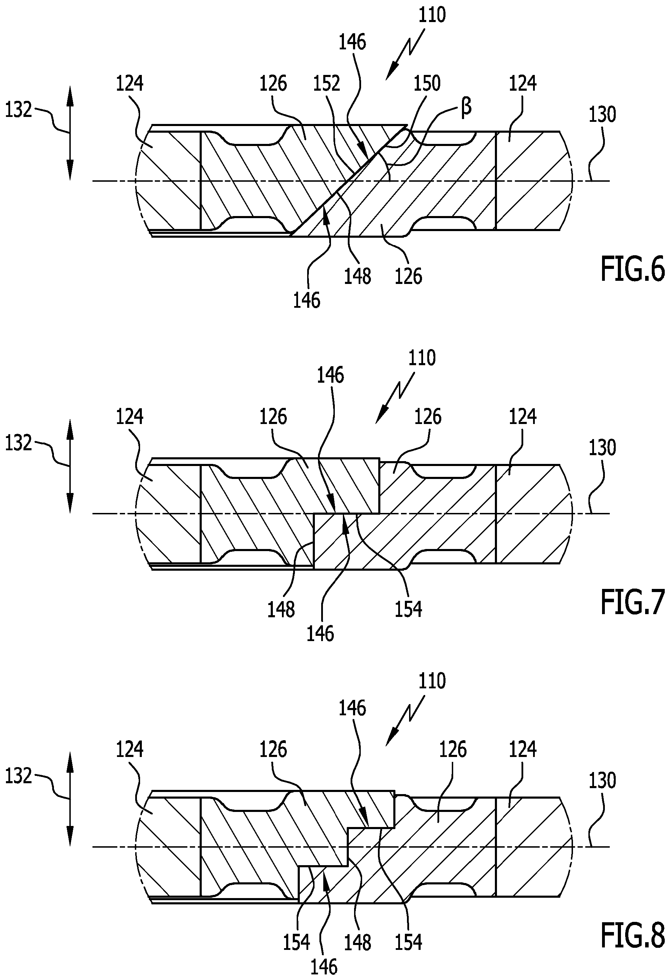

Derartige Koppelabschnitte 146 sind insbesondere in Fig. 5 und in den alternativen Detailansichten in den Fig. 6 bis 8 deutlich zu erkennen.

Die Koppelabschnitte 146 sind insbesondere derart ausgebildet, dass die elastischen Dichtkörperteile 126 im Bereich der Koppelabschnitte 146 dichtend aneinander anliegen, wenn die Dichtelementbauteile 122 und/oder die Grundkörperteile 124 miteinander verbunden sind, insbesondere wenn das Dichtelement 110 zwischen dem ersten Objekt 112 und dem zweiten Objekt 114 angeordnet ist.

Die Koppelabschnitte 146 weisen jeweils eine Koppelgeometrie 148 auf.

Vorzugsweise sind die Koppelabschnitte 146 der elastischen Dichtkörperteile 126 zweier miteinander verbundener Dichtelementbauteile 122 aneinander anlegbar, insbesondere dichtend miteinander verbindbar.

Der eine oder die zwei Koppelabschnitte 146 des elastischen Dichtkörperteils 126 eines Dichtelementbauteils 122 umfassen vorzugsweise jeweils einen Zentralkoppelabschnitt 151 und einen Randkoppelabschnitt 153 (vergl. Fig. 2).

Wie insbesondere in den Fig. 6 bis 8 zu erkennen ist, weisen jeweils zwei elastische Dichtkörperteile 126 eine zueinander komplementäre Koppelgeometrie 148 auf.

Die Koppelgeometrie 148 der Koppelabschnitte 146 weist in Montagerichtung 132 der Dichtelementbauteile 122 und/oder der Grundkörperteile 124 insbesondere keine Hinterschnitte auf.

Vorzugsweise sind die elastischen Dichtkörperteile 126 bei Montage oder Verbindung der Grundkörperteile 124 in einer Richtung senkrecht oder schräg, das heißt quer, zur Haupterstreckungsebene 130 des Dichtelements 110 dichtend aneinander anlegbar.

Insbesondere sind die Grundkörperteile 124 mit den daran angeordneten elastischen Dichtkörperteilen 126 mittels der Verbindungsabschnitte 128 in Montagerichtung 132 verbindbar, ohne dass eine Verbindung der Grundkörperteile 124 von Hinterschnitten der Koppelgeometrie 148 behindert wird.

Bei der in den Fig. 1 bis 6 dargestellten Ausführungsform des Dichtelements 110 ist die Koppelgeometrie 148 beispielsweise als Fase 150 oder als Schrägfläche 152 ausgebildet. Die Fase 150 oder Schrägfläche 152 ist insbesondere in einem Winkel β im Bereich von ungefähr 40° bis ungefähr 70° zur Haupterstreckungsebene 130 des Dichtelements 110 angeordnet.

Günstig kann es insbesondere sein, wenn die Fase 150 oder die Schrägfläche 152 in einem Winkel β von ungefähr 45° zur Haupterstreckungsebene 130 des Dichtelements 110 angeordnet ist (vergl. Fig. 6).

Bei den in den Fig. 7 und 8 dargestellten Ausführungsbeispielen des Koppelabschnitts 146 ist die Koppelgeometrie 148 gestuft oder getreppt ausgebildet und weist eine Stufe 154 (vergl. Fig. 7) oder zwei oder mehr Stufen 154 (vergl. Fig. 8) auf. Es ist jedoch auch denkbar, dass die Koppelgeometrie 148 gewellt ausgebildet ist.

Wenn im Stoßbereich 134 nur jeweils an einem Grundkörperteil 124 ein elastischer Dichtkörperteil 126 vorgesehen ist, ist vorzugsweise keine Koppelgeometrie 148 erforderlich.

Bei der in den Fig. 1 bis 8 dargestellten Ausführungsform des Dichtelements 110 umfasst der elastische Dichtkörper 118 eine Dichtlippe 160, welche an der Innenkante 136 des Grundkörpers 116 angeordnet ist.

Die Dichtlippe 160 ist in einem Montagezustand der Dichtungsanordnung 100 insbesondere ringförmig geschlossen ausgebildet.

Die Dichtlippe 160 ragt in einer senkrecht zu der Haupterstreckungsebene 130 des Dichtelements 110 verlaufenden Richtung vorzugsweise über den Grundkörper 116 des Dichtelements 110 hinaus, insbesondere beidseitig (vergl. Fig. 5).

Günstig kann es dabei sein, wenn ein elastischer Dichtkörperteil 126 eines Dichtelementbauteils 122 jeweils einen Dichtlippenabschnitt 162 umfasst.

Mittels des Randkoppelabschnitts 153 ist vorzugsweise eine insbesondere dichte Kopplung der Dichtlippenabschnitte 162 der elastischen Dichtkörperteile 126 zweier miteinander verbundener Dichtelementbauteile 122 realisierbar.

Vorzugsweise bilden die Dichtlippenabschnitte 162 der elastischen Dichtkörperteile 126 der Dichtelementbauteile 122 des Dichtelements 110 in einem Montagezustand der Dichtungsanordnung 100 jeweils eine ringförmig geschlossene Dichtlippe 160 des elastischen Dichtkörpers 118.

An einer äußeren Kante 164 des Grundkörpers 116 ist bei der in den Fig. 1 bis 8 dargestellten Ausführungsform des Dichtelements 110 insbesondere keine Dichtlippe 160 angeordnet.

Die an der Innenkante 136 des Grundkörpers 116 angeordnete Dichtlippe 160 weist in einer Richtung senkrecht zu der Haupterstreckungsebene 130 des Dichtelements 110 eine erste Dichtlippenhöhe 166 auf (vergl. Fig. 5).

Der Grundkörper 116 weist in einer Richtung senkrecht zur Haupterstreckungsebene 130 des Dichtelements 110 eine Grundkörperhöhe 168 auf.

Der Grundkörper 116 weist vorzugsweise eine Grundkörperhöhe 168 im Bereich von ungefähr 1 bis ungefähr 3 mm, insbesondere im Bereich von ungefähr 1,5 bis ungefähr 2 mm, auf.

Die elastischen Dichtkörperteile 126 weisen in dem Koppelabschnitt 146, insbesondere in dem Zentralkoppelabschnitt 151, in der senkrecht zu der Haupterstreckungsebene 130 des Dichtelements 110 verlaufenden Richtung insbesondere eine Höhe 170 auf, welche größer ist als die Grundkörperhöhe 168 in der senkrecht zu der Haupterstreckungsebene 130 des Dichtelements 110 verlaufenden Richtung.

Beispielsweise ist es denkbar, dass die elastischen Dichtkörperteile 126 im Koppelabschnitt 146, insbesondere im Zentralkoppelabschnitt 151, in der senkrecht zu der Haupterstreckungsebene 130 des Dichtelements 110 verlaufenden Richtung eine Höhe 170 aufweisen, welche mindestens ungefähr 5 %, vorzugsweise mindestens ungefähr 10 %, größer ist als die Grundkörperhöhe 168 in der senkrecht zu der Haupterstreckungsebene 130 des Dichtelements 110 verlaufenden Richtung.

Beispielsweise ist es ferner denkbar, dass die elastischen Dichtkörperteile 126 im Koppelabschnitt 146, insbesondere im Zentralkoppelabschnitt 151, in der senkrecht zu der Haupterstreckungsebene 130 des Dichtelements 110 verlaufenden Richtung eine Höhe 170 aufweisen, welche höchstens ungefähr 20 %, vorzugsweise höchstens ungefähr 15 %, größer ist als die Grundkörperhöhe 168 in der senkrecht zu der Haupterstreckungsebene 130 des Dichtelements 110 verlaufenden Richtung.

Dadurch, dass die elastischen Dichtkörperteile 126 im Koppelabschnitt 146, insbesondere in dem Zentralkoppelabschnitt 151, in der senkrecht zu der Haupterstreckungsebene 130 des Dichtelements 110 verlaufenden Richtung insbesondere eine Höhe 170 aufweisen, welche größer ist als eine Grundkörperhöhe 168 in der senkrecht zu der Haupterstreckungsebene 130 des Dichtelements 110 verlaufenden Richtung, kann vorzugsweise ermöglicht werden, dass die elastischen Dichtkörperteile 126 zweier miteinander verbundener Dichtelementbauteile 122 zumindest teilweise komprimierbar sind, wenn das Dichtelement 110 zwischen zwei Objekten 112, 114 angeordnet wird.

Insbesondere sind dabei die Koppelgeometrien 148 der Koppelabschnitte 146 der elastischen Dichtkörperteile 126 zweier miteinander verbundener Dichtelementbauteile 122 dichtend aneinander anlegbar.

Günstig kann es sein, wenn die Dichtlippenhöhe 166 in der senkrecht zu der Haupterstreckungsebene 130 des Dichtelements 110 verlaufenden Richtung größer ist als die Höhe 170 der elastischen Dichtkörperteile 126 im Koppelabschnitt 146, insbesondere im Zentralkoppelabschnitt 151.

Eine Höhe der elastischen Dichtkörperteile 126 in dem Randkoppelabschnitt 153 in der senkrecht zu der Haupterstreckungsebene 130 des Dichtelements 110 verlaufenden Richtung entspricht vorzugsweise der Dichtlippenhöhe 170.

Wie in den Fig. 1 und 3 deutlich zu erkennen ist, sind die Dichtelementbauteile 122 nahezu identisch ausgebildet.

Das Dichtelement 110 umfasst bei der in den Fig. 1 bis 8 dargestellten Ausführungsform zwei identische Grundkörperteile 124.

Die elastischen Dichtkörperteile 126 des Dichtelements 110 sind nahezu identisch, jedoch im Stoßbereich 134, insbesondere im Bereich der Koppelabschnitte 146, verschieden ausgebildet.

Jedem Grundkörperteil 124 ist jeweils ein elastischer Dichtkörperteil 126 zugeordnet, so dass die Anzahl der elastischen Dichtkörperteile 126 insbesondere einer Anzahl der Grundkörperteile 124 entspricht.

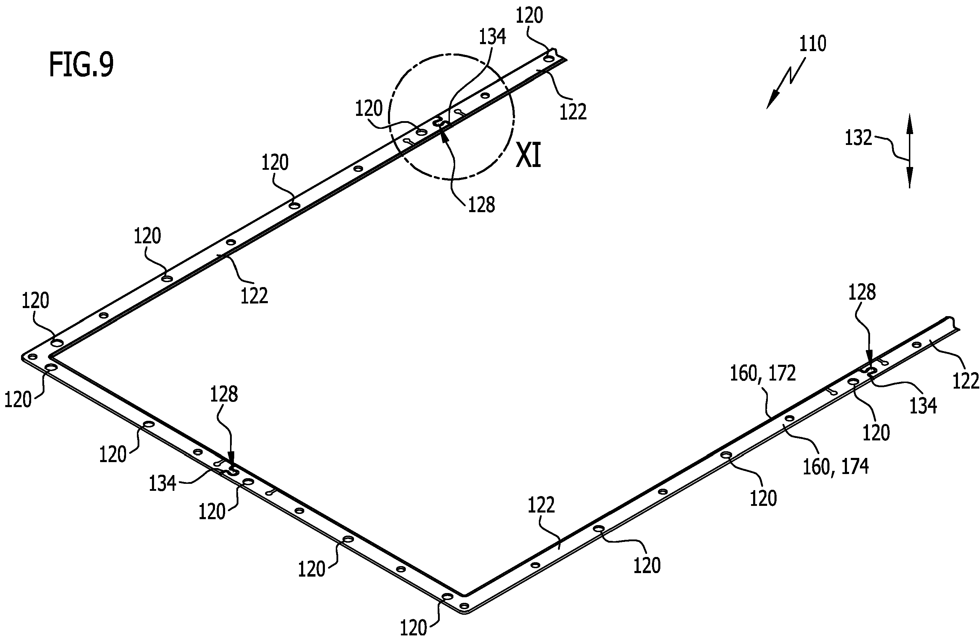

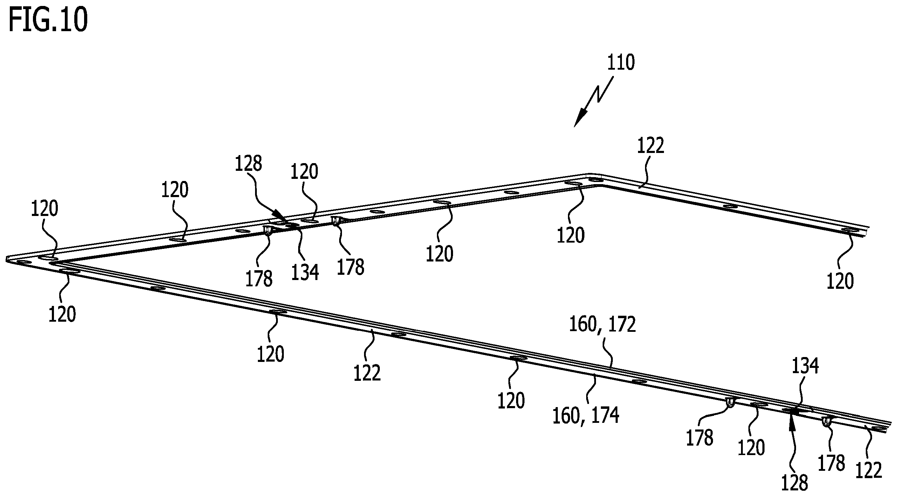

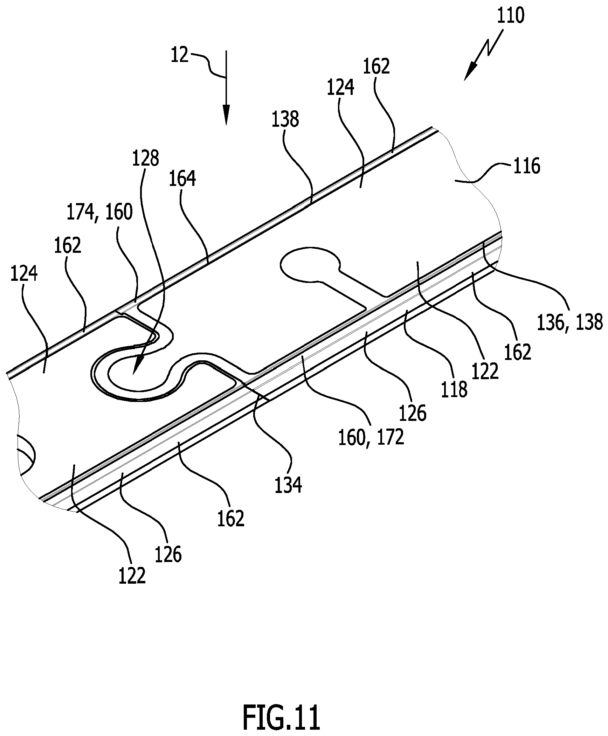

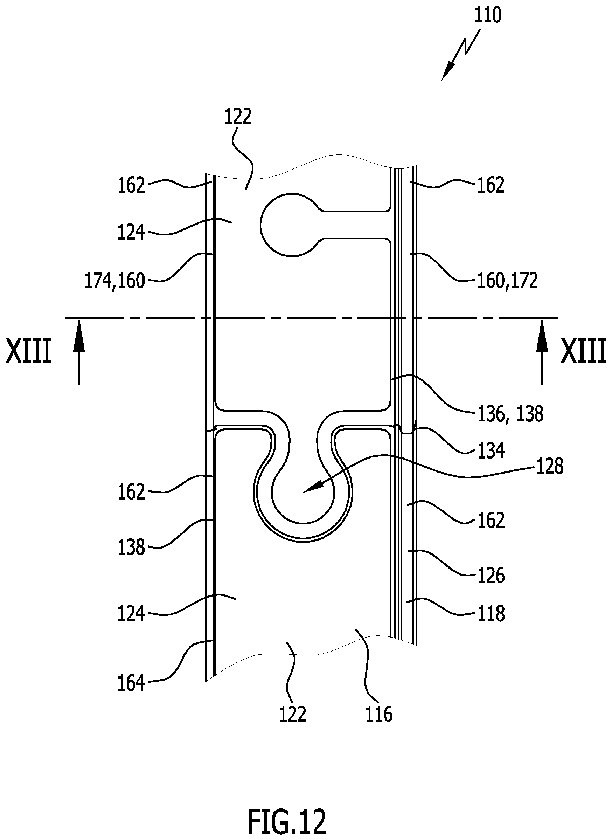

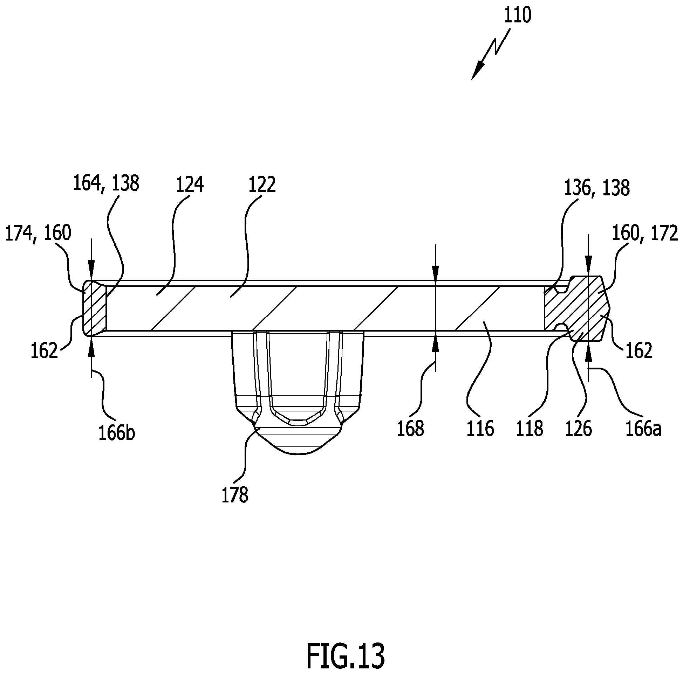

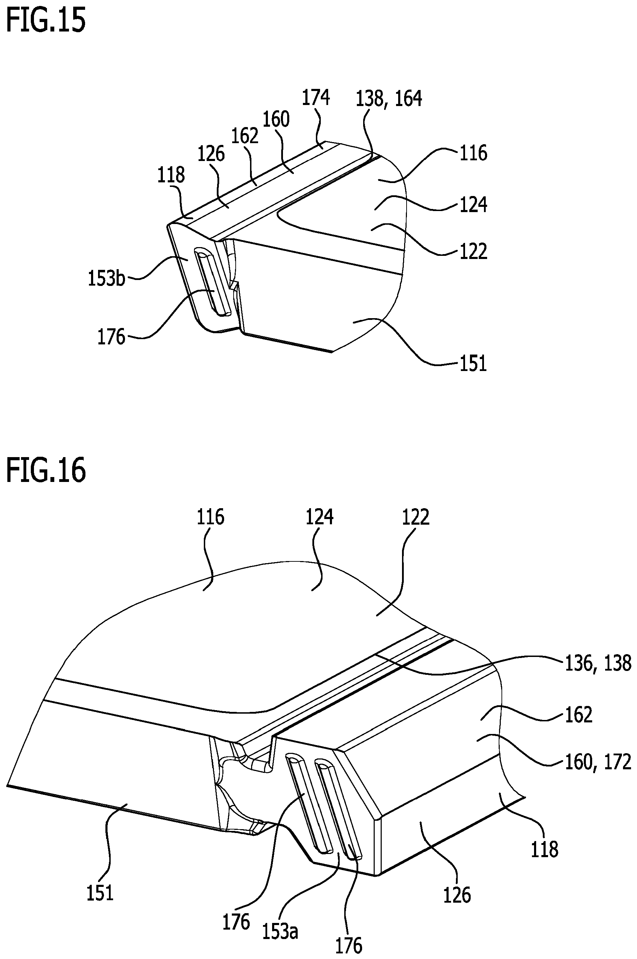

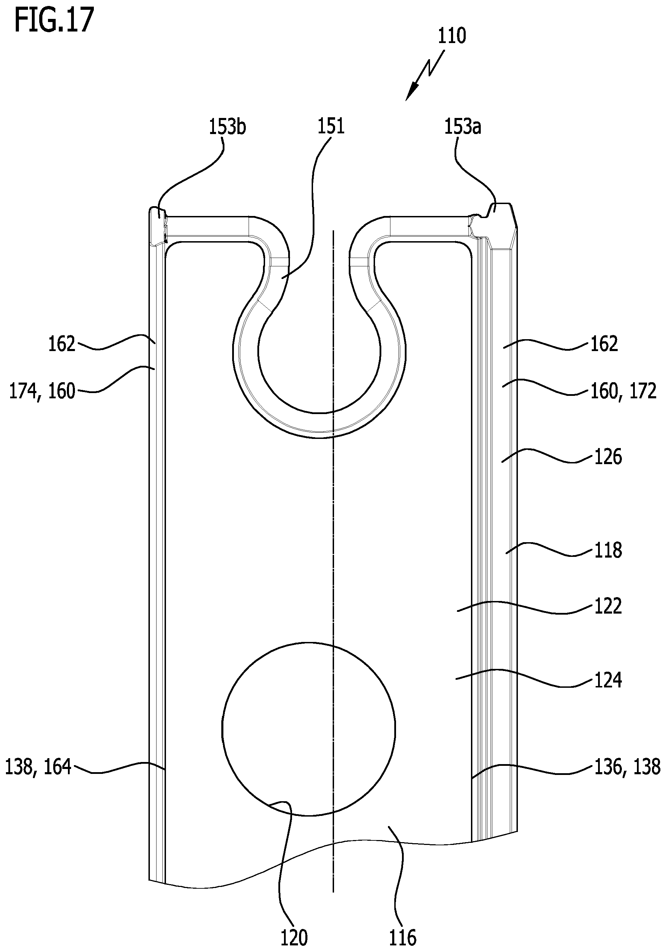

Eine in den Fig. 9 bis 17 dargestellte Ausführungsform des Dichtelements 110 unterscheidet sich von der in den Fig. 1 bis 8 dargestellten Ausführungsform des Dichtelements 110 im Wesentlichen dadurch, dass nicht nur an der Innenkante 136 des Grundkörpers 116 sondern auch an der äußeren Kante 164 des Grundkörpers 116 eine insbesondere ringförmig geschlossene Dichtlippe 160 angeordnet ist.

Die an der Innenkante 136 des Grundkörpers 116 angeordnete Dichtlippe 160 ist insbesondere eine Primärdichtlippe 172.

Die an der Innenkante 136 des Grundkörpers 116 angeordnete Dichtlippe 160 des elastischen Dichtkörpers 118 bildet insbesondere einen Hauptdichtbereich des Dichtelements 110.

Vorzugsweise ist mittels der an der Innenkante 136 des Grundkörpers 116 angeordneten Dichtlippe 160 eine Hauptdichtfunktion des Dichtelements 110 bereitstellbar.

Die an der äußeren Kante 164 des Grundkörpers 116 angeordnete Dichtlippe 160 ist insbesondere eine Sekundärdichtlippe 174.

Die an der äußeren Kante 164 des Grundkörpers 116 angeordnete Dichtlippe 160 bildet insbesondere einen Zusatzdichtbereich des Dichtelements 110.

Vorzugsweise ist mittels der an der äußeren Kante 164 des Grundkörpers 116 angeordneten Dichtlippe 160 eine Zusatzdichtfunktion des Dichtelements 110 bereitstellbar, insbesondere zusätzlich zu der Hauptdichtfunktion der an der Innenkante 136 des Grundkörpers 116 angeordneten Dichtlippe 160.

Mittels der an der äußeren Kante 164 des Grundkörpers 116 angeordneten Dichtlippe 160 ist beispielsweise eine Abdichtung gegen Spritzwasser realisierbar.

Vorzugsweise weist die an der Innenkante 136 des Grundkörpers 116 angeordnete Dichtlippe 160 in der senkrecht zu der Haupterstreckungsebene 130 des Dichtelements 110 verlaufenden Richtung eine Dichtlippenhöhe 166a auf, welche größer ist als eine Dichtlippenhöhe 166b der an der äußeren Kante 164 des Grundkörpers 116 angeordneten Dichtlippe 160 in der senkrecht zu der Haupterstreckungsebene 130 des Dichtelements 110 verlaufenden Richtung.

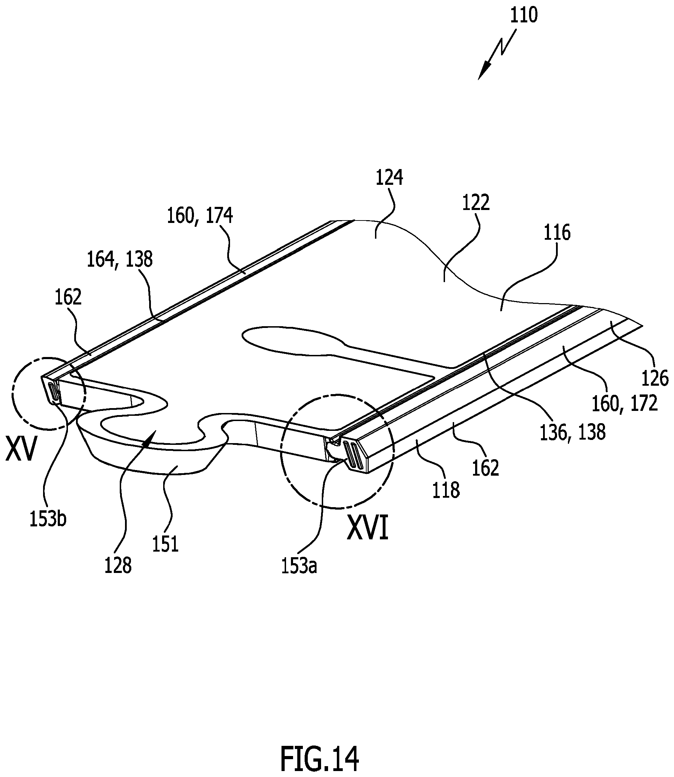

Bei der in den Fig. 9 bis 17 dargestellten Ausführungsform des Dichtelements 110 umfassen die zwei Koppelabschnitte 146 eines elastischen Dichtkörperteils 126 insbesondere einen Zentralkoppelabschnitt 151 und zwei Randkoppelabschnitte 153, insbesondere einen inneren Randkoppelabschnitt 153a und einen äußeren Randkoppelabschnitt 153b (vergl. Fig. 14 bis 17).

Der Zentralkoppelabschnitt 151 ist insbesondere zwischen den zwei Randkoppelabschnitten 153a, 153b angeordnet.

Vorzugsweise sind Dichtlippenabschnitte 162 verschiedener Dichtelementbauteile 122 des Dichtelements 110 mittels der Randkoppelabschnitte 153a, 153b miteinander koppelbar.

Insbesondere ist es denkbar, dass Dichtlippenabschnitte 162 der an der Innenkante 136 des Grundkörpers 116 angeordneten Dichtlippe 160 mittels des inneren Randkoppelabschnitts 153a miteinander koppelbar sind.

Vorzugsweise sind Dichtlippenabschnitte 162 der an der äußeren Kante 164 des Grundkörpers 116 angeordneten Dichtlippe 160 mittels des äußeren Randkoppelabschnitts 153b miteinander koppelbar sind.

Vorzugsweise umfassen die zwei Randkoppelabschnitte 153a, 153b des Koppelabschnitts 146 eine oder zwei Zusatzdichtlippen 176. Die Zusatzdichtlippen dienen insbesondere zum Abdichten im Bereich der Stoßfuge 149.

Günstig kann es sein, wenn der innere Randkoppelabschnitt 153a zwei Zusatzdichtlippen 176 umfasst und/oder wenn der äußere Randkoppelabschnitt 153b zwei Zusatzdichtlippen 176 umfasst.

Vorzugsweise umfassen nur die zwei Randkoppelabschnitte 153a, 153b eines einzelnen Koppelabschnitts 146 eines elastischen Dichtkörperteils 126 eines jeweiligen Dichtelementbauteils 122 eine Zusatzdichtlippe 176.

Günstig kann es daher sein, wenn die zwei Randkoppelabschnitte 153a, 153b eines zweiten Koppelabschnitts 146 des elastischen Dichtkörperteils 126 des jeweiligen Dichtelementbauteils 122 keine Zusatzdichtlippe 176 umfassen.

Mittels der Zusatzdichtlippen 176 ist vorzugsweise eine verbesserte Abdichtung im Bereich der Randkoppelabschnitte 153a, 153b realisierbar. Insbesondere kann dabei eine Dichtfunktion der Dichtlippen 160, insbesondere der Primärdichtlippe 172 und/oder der Sekundärdichtlippe 174, im Bereich der Stoßfuge 149 gewährleistet werden.

Bei der in den Fig. 9 bis 17 dargestellten Ausführungsform des Dichtelements 110 umfassen die elastischen Dichtkörperteile 126 der Dichtelementbauteile 122 vorzugsweise jeweils eine oder mehrere, beispielsweise zwei, Positioniervorsprünge 178.

Die Positioniervorsprünge 178 eines jeweiligen elastischen Dichtkörperteils 126 eines Dichtelementbauteils 122 ragen vorzugsweise über den Grundkörper 116 des Dichtelementbauteils 122 weg, insbesondere in der senkrecht zu der Haupterstreckungsebene 130 des Dichtelements 110 verlaufenden Richtung.

Günstig kann es sein, wenn sämtliche Positioniervorsprünge 178 eines jeweiligen elastischen Dichtkörperteils 126 eines Dichtelementbauteils 122 auf derselben Seite des Dichtelementbauteils 122 über den Grundkörper 116 des Dichtelementbauteils 122 weg ragen.

Vorzugsweise sind die Dichtelementbauteile 122 und/oder das Dichtelement 110 mittels der Positioniervorsprünge 178 relativ zu dem ersten Objekt 112 und/oder relativ zu dem zweiten Objekt 114 positionierbar.

Insbesondere sind die Dichtelementbauteile 122 zur Positionierung derselben relativ zu dem ersten Objekt 112 und/oder relativ zu dem zweiten Objekt 114 und/oder relativ zu weiteren Dichtelementbauteilen 122 aufgrund der Positioniervorsprünge 178 des elastischen Dichtkörperteils 126 eines jeweiligen Dichtelementbauteils 122 in der parallel zu der Haupterstreckungsebene 130 des Dichtelements 110 verlaufenden Richtung bewegbar.

Im Übrigen stimmt die in den Fig. 9 bis 17 dargestellte Ausführungsform des Dichtelements 110 mit der in den Fig. 1 bis 8 dargestellten Ausführungsform des Dichtelements 110 überein, so dass auf deren vorstehende Beschreibung insoweit Bezug genommen wird.

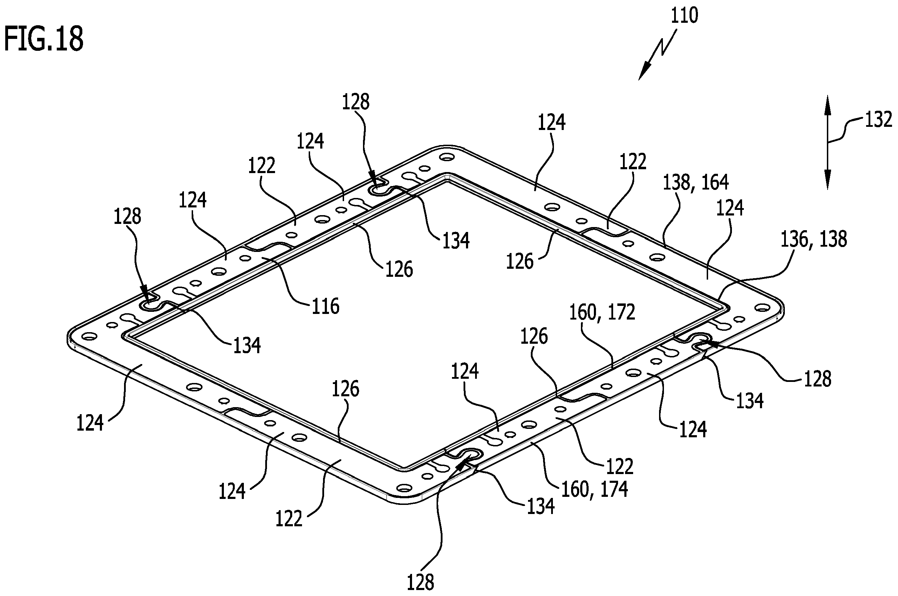

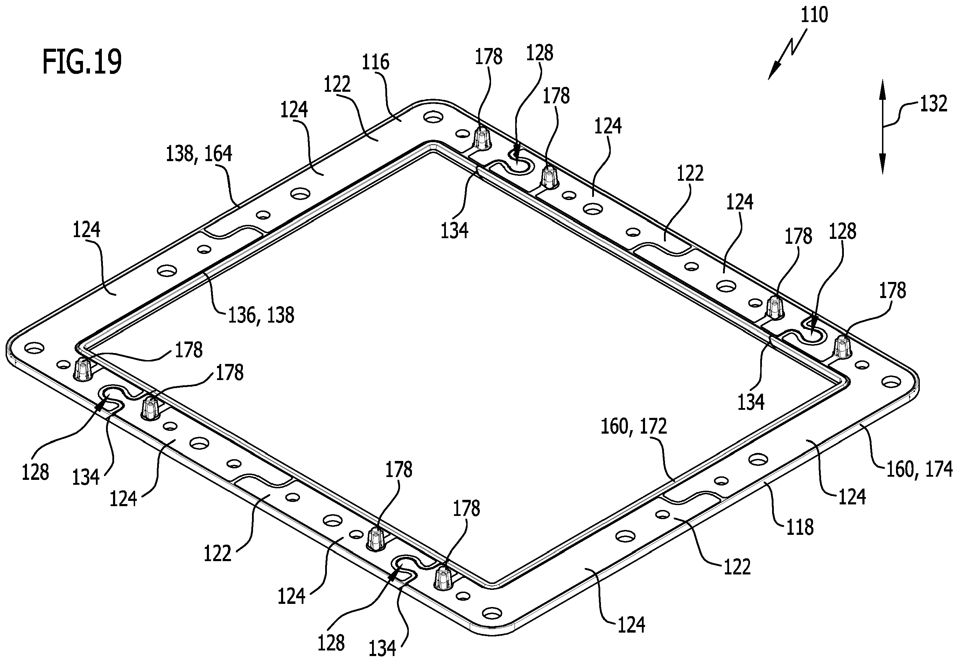

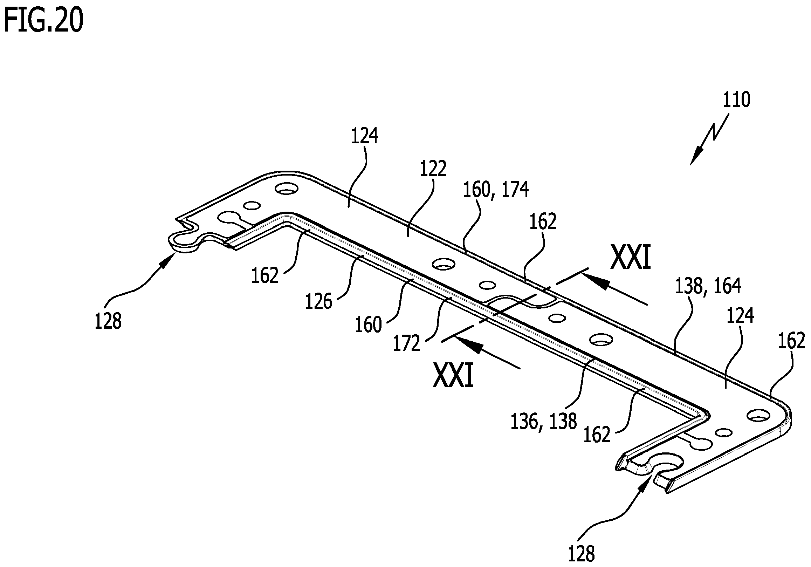

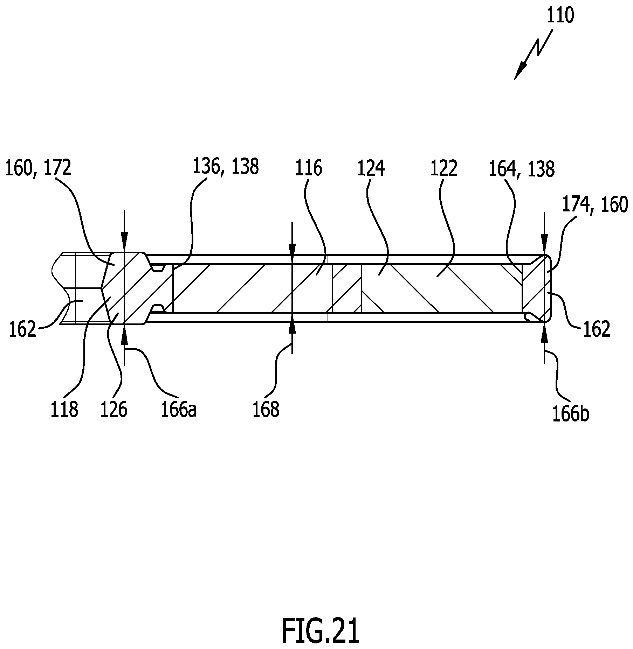

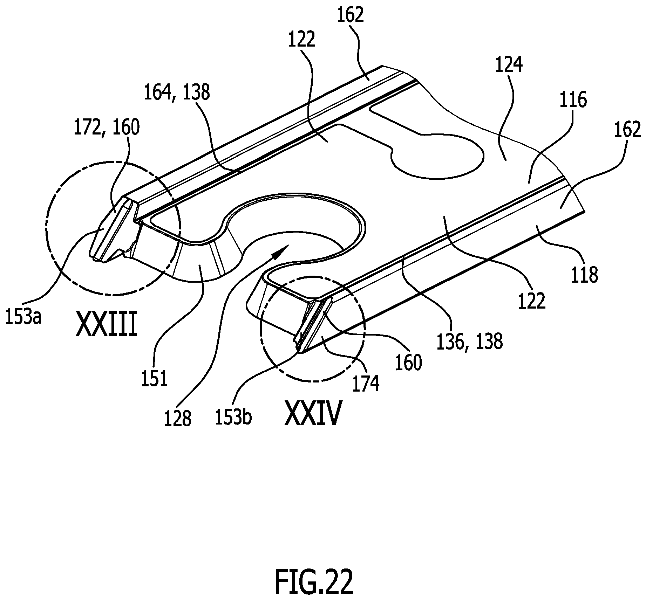

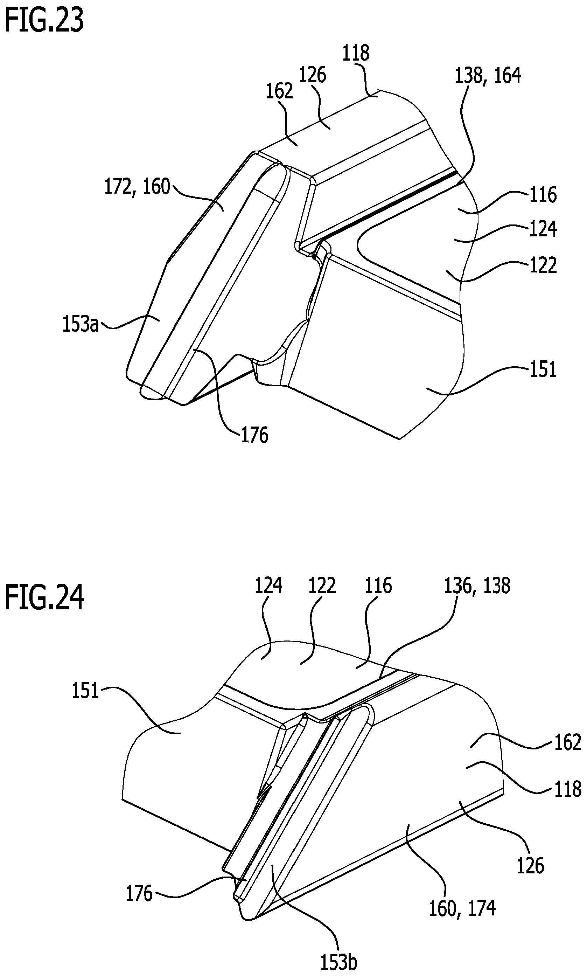

Eine in den Fig. 18 bis 24 dargestellte Ausführungsform des Dichtelements 110 unterscheidet sich von der in den Fig. 9 bis 17 dargestellten Ausführungsform des Dichtelements 110 im Wesentlichen dadurch, dass ein jeweiliges Dichtelementbauteil 122 jeweils einen einstückigen elastischen Dichtkörperteil 126 und mehrere Grundkörperteile 124 umfasst, wobei mehrere Grundkörperteile 124 des jeweiligen Dichtelementbauteils 122 mittels des einstückigen elastischen Dichtkörperteils 126 des jeweiligen Dichtelementbauteils 122 miteinander verbunden sind.

Vorzugsweise sind dabei sämtliche Grundkörperteile 124 eines jeweiligen Dichtelementbauteils 122 mittels eines einzelnen einstückigen elastischen Dichtkörperteils 126 miteinander verbunden, beispielsweise durch Anspritzen des elastischen Dichtkörperteils 126 an die Grundkörperteile 124.

Vorzugsweise sind die Grundkörperteile 124 eines jeweiligen Dichtelementbauteils 122 verkleinerbar, wenn mehrere, beispielsweise zwei, Grundkörperteile 124 eines jeweiligen Dichtelementbauteils 122 mittels des einstückigen Dichtkörperteils 126 miteinander verbunden sind. Insbesondere sind die Grundkörperteile 124 somit kostengünstig herstellbar, beispielsweise durch Stanzen.

Bei der in den Fig. 18 bis 24 dargestellten Ausführungsform des Dichtelements 110 umfassen die Randkoppelabschnitte 153 vorzugsweise nur eine Zusatzdichtlippe 176.

Im Übrigen stimmt die in den Fig. 18 bis 24 dargestellte Ausführungsform des Dichtelements 110 mit der in den Fig. 9 bis 17 dargestellten Ausführungsform des Dichtelements 110 überein, so dass auf deren vorstehende Beschreibung insoweit Bezug genommen wird.

Insgesamt kann eine Dichtungsanordnung 100 mit einem einfach und kostengünstig herstellbaren Dichtelement 110 bereitgestellt werden, welche eine einfache und zuverlässige Abdichtung eines ersten Fluidraums 102 von einem zweiten Fluidraum 104 ermöglicht.

## Patentansprüche

1. Dichtungsanordnung (100), insbesondere zur Abdichtung eines ersten Fluidraums (102) von einem zweiten Fluidraum (104) oder mehreren Fluidräumen, umfassend ein Dichtelement (110) zur Anordnung zwischen einem ersten Objekt (112) und einem zweiten Objekt (114), wobei das Dichtelement (110) zwei oder mehrere mittelbar oder unmittelbar miteinander verbindbare oder miteinander verbundene Dichtelementbauteile (122) umfasst, welche jeweils einen Grundkörperteil (124) und einen am Grundkörperteil (124) angeordneten elastischen Dichtkörperteil (126) umfassen,
wobei die Grundkörperteile (124) der Dichtelementbauteile (122) einen vorzugsweise formstabilen Grundkörper (116) des Dichtelements (110) bilden, wobei die elastischen Dichtkörperteile (126) der Dichtelementbauteile (122) einen elastischen Dichtkörper (118) zum Bereitstellen einer Dichtfunktion des Dichtelements (110) bilden
wobei die Grundkörperteile (124) jeweils einen oder mehrere, insbesondere jeweils zwei, Verbindungsabschnitte (128) zur Verbindung der Grundkörperteile (124) miteinander umfassen,
**dadurch gekennzeichnet, dass**
die Verbindungsabschnitte (128) derart komplementär zueinander ausgebildet sind, dass sie formschlüssig ineinander eingreifen, wenn die Grund¬körperteile (124) miteinander verbunden sind,
wobei ein Dichtelementbauteil (122) jeweils einen einstückigen elastischen Dichtkörperteil (126) und einen oder mehrere Grundkörperteile (124) umfasst, wobei mehrere Grundkörperteile (124) eines Dichtelementbauteils (122) mittels des einstückigen elastischen Dichtkörperteils (126) des jeweiligen Dichtelementbauteils (122) miteinander verbunden sind.

2. Dichtungsanordnung (100) nach Anspruch 1, **dadurch gekennzeichnet, dass** die Dichtelementbauteile (122), insbesondere zur Herstellung einer oder mehrerer ringförmig geschlossenener Formen des Grundkörpers (116), puzzleartig und/oder formschlüssig miteinander verbindbar sind.

3. Dichtungsanordnung (100) nach Anspruch 1 oder 2, **dadurch gekennzeichnet, dass** das Dichtelement (110) mehrere identische Dichtelementbauteile (122) und/oder mehrere identische Grundkörperteile (124) und/oder mehrere identische elastische Dichtkörperteile (126) umfasst.

4. Dichtungsanordnung (100) nach einem der Ansprüche 1 bis 3, **dadurch gekennzeichnet, dass** die Grundkörperteile (124) in einer Richtung senkrecht zu einer Haupterstreckungsebene (130) des Dichtelements (110) miteinander verbindbar, insbesondere steckverbindbar, sind.

5. Dichtungsanordnung (100) nach einem der Ansprüche 1 bis 4, **dadurch gekennzeichnet, dass** die mehreren Grundkörperteile eines jeweiligen Dichtelementbauteils durch Anspritzen des elastischen Dichtkörperteils an die Grundkörperteile miteinander verbunden sind.

6. Dichtungsanordnung (100) nach einem der Ansprüche 1 bis 5, **dadurch gekennzeichnet, dass** der elastische Dichtkörper (118) eine oder mehrere Dichtlippen (160), insbesondere eine an einer Innenkante (136) des Grundkörpers (116) angeordnete Dichtlippe (160) und/oder eine an einer äußeren Kante (164) des Grundkörpers (116) angeordnete Dichtlippe (160), umfasst.

7. Dichtungsanordnung (100) nach Anspruch 6, **dadurch gekennzeichnet, dass** die an einer Innenkante (136) des Grundkörpers (116) angeordnete Dichtlippe (160) in einer Richtung senkrecht zu einer Haupterstreckungsebene (130) des Dichtelements (110) eine erste Dichtlippenhöhe (166a) aufweist und dass die an einer äußeren Kante (164) des Grundkörpers (116) angeordnete Dichtlippe (160) in einer Richtung senkrecht zu einer Haupterstreckungsebene (130) des Dichtelements (110) eine zweite Dichtlippenhöhe (166b) aufweist, wobei die erste Dichtlippenhöhe (166a) größer ist als die zweite Dichtlippenhöhe (166b).

8. Dichtungsanordnung (100) nach einem der Ansprüche 1 bis 7, **dadurch gekennzeichnet, dass** die elastischen Dichtkörperteile (126) jeweils einen oder zwei Koppelabschnitte (146) zur Kopplung aneinander anliegender oder einander überlappender elastischer Dichtkörperteile (126) umfassen,
wobei optional vorgesehen ist, dass der eine oder die zwei Koppelabschnitte (146) eines elastischen Dichtkörperteils (126) einen Zentralkoppelabschnitt (151) und einen oder mehrere, insbesondere zwei, Randkoppelabschnitte (153) umfassen, wobei ferner optional vorgesehen ist, dass der eine oder die mehreren, insbesondere die zwei, Randkoppelabschnitte (153) eines Koppelabschnitts (146) jeweils eine oder mehrere Zusatzdichtlippen (176) umfassen, insbesondere zum Abdichten im Bereich einer Stoßfuge (149).

9. Dichtungsanordnung (100) nach einem der Ansprüche 1 bis 8, **dadurch gekennzeichnet,**
a) **dass** der elastische Dichtkörper (118) an einer Kante (136, 138) oder an mehreren Kanten (136, 138) des Grundkörpers (116) angeordnet ist; und/oder
b) **dass** die elastischen Dichtkörperteile (126) sich jeweils entlang einer Kante (136, 138) eines Grundkörperteils (124), insbesondere entlang einer Kante (138) eines Stoßbereichs (134) der Grundkörperteile (124), erstrecken; und/oder
c) **dass** die elastischen Dichtkörperteile (126) der Dichtelementbauteile (122) jeweils einen oder mehrere, beispielsweise zwei, Positioniervorsprünge (178) umfassen; und/oder
d) **dass** der Grundkörper (116) in einer Richtung senkrecht zur Haupterstreckungsebene (130) des Dichtelements (110) eine konstante Grundkörperhöhe (168) aufweist.

10. Dichtungsanordnung (100) nach einem der Ansprüche 1 bis 9, **dadurch gekennzeichnet, dass** der elastische Dichtkörper (118) ein Elastomermaterial (133) umfasst oder aus einem Elastomermaterial (133) gebildet ist, wobei das Elastomermaterial (133) vorzugsweise ein Ethylen-Acrylat-Kautschuk (AEM), ein Ethylen-Propylen-Dien-Kautschuk (EPDM), ein Acrylat-Kautschuk (ACM), ein Fluorkautschuk (FKM), ein Hydrierter Acrylnitrilbutadien-Kautschuk (HNBR), ein Flüssig-Silikon, insbesondere Liquid Silicone Rubber (LSR), oder ein Silikon-Kautschuk (MVQ), insbesondere ein Vinyl-Methyl-Polysiloxan, ist.

11. Dichtungsanordnung (100) nach einem der Ansprüche 1 bis 10, **dadurch gekennzeichnet,**
a) **dass** der Grundkörper (116) aus einem metallischen Grundkörpermaterial (135) hergestellt ist oder ein metallisches Grundkörpermaterial (135) umfasst, wobei das metallische Grundkörpermaterial (135) insbesondere Stahl oder Aluminium ist, oder
b) **dass** der Grundkörper (116) aus einem Kunststoff-Grundkörpermaterial hergestellt ist oder ein Kunststoff-Grundkörpermaterial umfasst, wobei das Kunststoff-Grundkörpermaterial insbesondere ein faserverstärktes Kunststoffmaterial ist, beispielsweise ein glasfaserverstärktes Kunststoffmaterial.

12. Dichtungsanordnung (100) nach einem der Ansprüche 1 bis 11, **dadurch gekennzeichnet, dass** der Grundkörper (116) und/oder die Grundkörperteile (124) durch Stanzen und/oder durch Laserschneiden und/oder durch Wasserstrahlschneiden und/oder durch manuelles Schneiden hergestellt sind oder dass der Grundkörper (116) und/oder die Grundkörperteile (124) durch Spritzgießen hergestellt sind.

13. Batterie- oder Steuerungskasten (106), insbesondere für ein Kraftfahrzeug (108), umfassend eine Dichtungsanordnung (100) nach einem der Ansprüche 1 bis 12.

14. Kraftfahrzeug (108), umfassend eine oder mehrere Dichtungsanordnungen (100) nach einem der Ansprüche 1 bis 12, insbesondere umfassend einen Batterie- oder Steuerungskasten (106) nach Anspruch 13.

15. Verfahren zur Herstellung einer Dichtungsanordnung (100) zur Abdichtung eines ersten Fluidraums (102) von einem zweiten Fluidraum (104) oder mehreren Fluidräumen,
insbesondere Verfahren zur Herstellung einer Dichtungsanordnung (100) nach einem der Ansprüche 1 bis 12, wobei das Verfahren Folgendes umfasst:
Bereitstellen mehrerer Dichtelementbauteile (122), welche jeweils einen Grundkörperteil (124) und einen am Grundkörperteil (124) angeordneten elastischen Dichtkörperteil (126) umfassen;
mittelbares oder unmittelbares Verbinden, insbesondere puzzleartiges Verbinden und/oder formschlüssiges Verbinden, der Dichtelementbauteile (122) miteinander, wobei die Dichtelementbauteile (122) als voneinander separate Bauteile hergestellt werden,
wobei jeweils ein elastischer Dichtkörperteil (126) an mehrere Grundkörperteile (124) in einem Spritzgussprozess angespritzt wird oder wobei jeweils ein elastischer Dichtkörperteil (126) mit mehreren Grundkörperteilen (124) mittels Compression Molding und/oder mittels Compression Transfer Molding verbunden wird,
wobei beim Herstellen der Grundkörperteile (124) Verbindungsabschnitte (128) zum formschlüssigen Verbinden der Grundkörperteile (124) hergestellt werden, wobei die Verbindungsabschnitte (128) derart komplementär zueinander ausgebildet werden, dass sie formschlüssig ineinander eingreifen, wenn die Grund¬körperteile (124) miteinander verbunden sind.

## Claims

1. Seal arrangement (100), in particular for sealing a first fluid space (102) from a second fluid space (104) or a plurality of fluid spaces, comprising a sealing element (110) for arrangement between a first object (112) and a second object (114), the sealing element (110) comprising two or more sealing element components (122) which can be or are connected indirectly or directly to one another and which each comprise a base body part (124) and a resilient sealing body part (126) arranged on the base body part (124),
the base body parts (124) of the sealing element components (122) forming a preferably dimensionally stable base body (116) of the sealing element (110),
the resilient sealing body parts (126) of the sealing element components (122) forming a resilient sealing body (118) for providing a sealing function of the sealing element (110),
the base body parts (124) each comprising one or more, in particular in each case two, connecting portions (128) for connecting the base body parts (124) to one another,
**characterized in that** the connecting portions (128) are designed to be complementary to one another in such a way that they engage in one another in a form-fitting manner when the base body parts (124) are connected to one another,
each sealing element component (122) comprising a one-piece resilient sealing body part (126) and one or more base body parts (124),
a plurality of base body parts (124) of a sealing element component (122) being connected to one another by means of the one-piece resilient sealing body part (126) of the particular sealing element component (122).

2. Seal arrangement (100) in accordance with claim 1, **characterized in that** the sealing element components (122) can be connected to one another in a puzzle-like and/or form-fitting manner, in particular for producing one or more annularly closed shapes of the base body (116).

3. Seal arrangement (100) in accordance with claim 1 or 2, **characterized in that** the sealing element (110) comprises a plurality of identical sealing element components (122) and/or a plurality of identical base body parts (124) and/or a plurality of identical resilient sealing body parts (126).

4. Seal arrangement (100) in accordance with any one of claims 1 to 3, **characterized in that** the base body parts (124) can be connected to one another, in particular plug-connected, in a direction perpendicular to a main extension plane (130) of the sealing element (110).

5. Seal arrangement (100) in accordance with any one of claims 1 to 4, **characterized in that** the plurality of base body parts of a particular sealing element component are connected to one another by injection molding the resilient sealing body part onto the base body parts.

6. Seal arrangement (100) in accordance with any one of claims 1 to 5, **characterized in that** the resilient sealing body (118) comprises one or more sealing lips (160), in particular a sealing lip (160) arranged on an inner edge (136) of the base body (116) and/or a sealing lip (160) arranged on an outer edge (164) of the base body (116).

7. Seal arrangement (100) in accordance with claim 6, **characterized in that** the sealing lip (160) arranged on an inner edge (136) of the base body (116) has a first sealing lip height (166a) in a direction perpendicular to a main extension plane (130) of the sealing element (110), **and in that** the sealing lip (160) arranged on an outer edge (164) of the base body (116) has a second sealing lip height (166b) in a direction perpendicular to a main extension plane (130) of the sealing element (110), the first sealing lip height (166a) being greater than the second sealing lip height (166b).

8. Seal arrangement (100) in accordance with any one of claims 1 to 7, **characterized in that** the resilient sealing body parts (126) each comprise one or two coupling portions (146) for coupling mutually abutting or mutually overlapping resilient sealing body parts (126),
it being optionally provided that the one or the two coupling portions (146) of a resilient sealing body part (126) comprise a central coupling portion (151) and one or more, in particular two, edge coupling portions (153),
it being further optionally provided that the one or more, in particular the two, edge coupling portions (153) of a coupling portion (146) each comprise one or more additional sealing lips (176), in particular for sealing in the region of an abutting joint (149).

9. Seal arrangement (100) in accordance with any one of claims 1 to 8, **characterized in that**
a) the resilient sealing body (118) is arranged on one edge (136, 138) or on a plurality of edges (136, 138) of the base body (116); and/or
b) the resilient sealing body parts (126) each extend along an edge (136, 138) of a base body part (124), in particular along an edge (138) of an abutment region (134) of the base body parts (124); and/or
c) the resilient sealing body parts (126) of the sealing element components (122) each comprise one or more, for example two, positioning projections (178); and/or
d) the base body (116) has a constant base body height (168) in a direction perpendicular to the main extension plane (130) of the sealing element (110).

10. Seal arrangement (100) in accordance with any one of claims 1 to 9, **characterized in that** the resilient sealing body (118) comprises an elastomer material (133) or is made of an elastomer material (133), the elastomer material (133) preferably being an ethylene acrylate rubber (AEM), an ethylene propylene diene rubber (EPDM), an acrylate rubber (ACM), a fluorine rubber (FKM), a hydrogenated acrylonitrile butadiene rubber (HNBR), a liquid silicone, in particular liquid silicone rubber (LSR), or a silicone rubber (MVQ), in particular a vinyl methyl polysiloxane.

11. Seal arrangement (100) in accordance with any one of claims 1 to 10, **characterized in that**
a) the base body (116) is made of a metal base body material (135) or comprises a metal base body material (135), the metal base body material (135) being in particular steel or aluminum, or
b) the base body (116) is made of a plastics base body material or comprises a plastics base body material, the plastics base body material being in particular a fiber-reinforced plastics material, for example a glass-fiber reinforced plastics material.

12. Seal arrangement (100) in accordance with any one of claims 1 to 11, **characterized in that** the base body (116) and/or the base body parts (124) are produced by punching and/or by laser cutting and/or by water jet cutting and/or by manual cutting **or in that** the base body (116) and/or the base body parts (124) are produced by injection molding.

13. Battery or control box (106), in particular for a motor vehicle (108), comprising a seal arrangement (100) in accordance with any one of claims 1 to 12.

14. Motor vehicle (108) comprising one or more seal arrangements (100) in accordance with any one of claims 1 to 12, in particular comprising a battery or control box (106) according to claim 13.

15. Method for producing a seal arrangement (100) for sealing a first fluid space (102) from a second fluid space (104) or a plurality of fluid spaces,
in particular a method for producing a seal arrangement (100) in accordance with any one of claims 1 to 12, wherein the method comprises the following:
providing a plurality of sealing element components (122), each of which comprises a base body part (124) and a resilient sealing body part (126) arranged on the base body part (124);
indirect or direct connection, in particular puzzle-like connection and/or form-fitting connection, of the sealing element components (122) to one another, wherein the sealing element components (122) are produced as components which are separate from one another,
wherein in each case a resilient sealing body part (126) is injection molded onto a plurality of base body parts (124) in an injection molding process or wherein in each case a resilient sealing body part (126) is connected to a plurality of base body parts (124) by means of compression molding and/or by means of compression transfer molding,
wherein, when producing the base body parts (124), connecting portions (128) are produced for the form-fitting connection of the base body parts (124),
wherein the connecting portions (128) are designed to be complementary to one another in such a way that they engage in one another in a form-fitting manner when the base body parts (124) are connected to one another.

## Revendications

1. Système d'étanchéité (100), destiné en particulier à assurer l'étanchéité d'un premier espace pour fluides (102) par rapport à un second espace pour fluides (104) ou à plusieurs espaces pour fluides, comprenant un élément d'étanchéité (110) destiné à être disposé entre un premier objet (112) et un second objet (114), dans lequel l'élément d'étanchéité (110) comprend deux composants d'élément d'étanchéité (122) ou plus pouvant être reliés entre eux ou étant reliés entre eux directement ou indirectement, lesquels comprennent respectivement une partie formant corps de base (124) et une partie formant corps d'étanchéité élastique (126) disposée sur la partie formant corps de base (124),
dans lequel les parties formant corps de base (124) des composants d'élément d'étanchéité (122) forment un corps de base (116), de préférence indéformable, de l'élément d'étanchéité (110),
dans lequel les parties formant corps d'étanchéité élastiques (126) des composants d'élément d'étanchéité (122) forment un corps d'étanchéité élastique (118) destiné à fournir une fonction d'étanchéité de l'élément d'étanchéité (110)
dans lequel les parties formant corps de base (124) comprennent respectivement une ou plusieurs, en particulier respectivement deux, sections de liaison (128) permettant de relier les parties formant corps de base (124) entre elles,
**caractérisé en ce que** les sections de liaison (128) sont réalisées de manière complémentaire les unes par rapport aux autres de telle sorte qu'elles viennent en prise les unes dans les autres par complémentarité de forme lorsque les parties formant corps de base (124) sont reliées entre elles,
dans lequel un composant d'élément d'étanchéité (122) comprend respectivement une partie formant corps d'étanchéité élastique (126) d'un seul tenant et une ou plusieurs parties formant corps de base (124),
dans lequel plusieurs parties formant corps de base (124) d'un composant d'élément d'étanchéité (122) sont reliées entre elles au moyen de la partie formant corps d'étanchéité élastique (126) d'un seul tenant du composant d'élément d'étanchéité (122) respectif.

2. Système d'étanchéité (100) selon la revendication 1, **caractérisé en ce que** les composants d'éléments d'étanchéité (122) peuvent être reliés entre eux à la manière d'un puzzle et/ou par complémentarité de forme, en particulier pour la fabrication d'une ou plusieurs formes annulaires fermées du corps de base (116).

3. Système d'étanchéité (100) selon la revendication 1 ou 2, **caractérisé en ce que** l'élément d'étanchéité (110) comprend plusieurs composants d'élément d'étanchéité (122) identiques et/ou plusieurs parties formant corps de base (124) identiques et/ou plusieurs parties formant corps d'étanchéité élastiques (126) identiques.

4. Système d'étanchéité (100) selon l'une des revendications 1 à 3,
**caractérisé en ce que** les parties formant corps de base (124) peuvent être reliées entre elles, en particulier par liaison enfichable, dans une direction perpendiculaire à un plan d'extension principal (130) de l'élément d'étanchéité (110).

5. Système d'étanchéité(100) selon l'une des revendications 1 à 4,
**caractérisé en ce que** les parties formant corps de base d'un composant d'élément d'étanchéité respectif sont reliées entre elles par injection de la partie formant corps d'étanchéité élastique sur les parties formant corps de base.

6. Système d'étanchéité (100) selon l'une des revendications 1 à 5,
**caractérisé en ce que** le corps d'étanchéité élastique (118) comprend une ou plusieurs lèvres d'étanchéité (160), en particulier une lèvre d'étanchéité (160) disposée sur un bord intérieur (136) du corps de base (116) et/ou une lèvre d'étanchéité (160) disposée sur un bord extérieur (164) du corps de base (116).

7. Système d'étanchéité (100) selon la revendication 6, **caractérisé en ce que** la lèvre d'étanchéité (160) disposée sur un bord intérieur (136) du corps de base (116) présente une première hauteur de lèvre d'étanchéité (166a) dans une direction perpendiculaire à un plan d'extension principal (130) de l'élément d'étanchéité (110) **et en ce que** la lèvre d'étanchéité (160) disposée sur un bord extérieur (164) du corps de base (116) présente une seconde hauteur de lèvre d'étanchéité (166b) dans une direction perpendiculaire à un plan d'extension principal (130) de l'élément d'étanchéité (110), dans lequel la première hauteur de lèvre d'étanchéité (166a) est supérieure à la seconde hauteur de lèvre d'étanchéité (166b).

8. Système d'étanchéité (100) selon l'une des revendications 1 à 7,
**caractérisé en ce que** les parties formant corps d'étanchéité élastiques (126) comprennent respectivement une ou deux sections d'accouplement (146) pour l'accouplement de parties formant corps d'étanchéité élastiques (126) adjacentes ou se chevauchant,
dans lequel, éventuellement, il est prévu que l'une ou les deux sections d'accouplement (146) d'une partie formant corps d'étanchéité élastique (126) comprennent une section d'accouplement centrale (151) et une ou plusieurs, en particulier deux, sections d'accouplement de bord (153),
dans lequel, éventuellement, il est en outre prévu que la ou les sections d'accouplement de bord (153) d'une section d'accouplement (146), en particulier les deux, comprennent respectivement une ou plusieurs lèvres d'étanchéité supplémentaires (176), en particulier pour l'étanchéité dans la zone d'un joint (149).

9. Système d'étanchéité (100) selon l'une des revendications 1 à 8, **caractérisé en ce**
a) **que** le corps d'étanchéité élastique (118) est disposé sur un bord (136, 138) ou sur plusieurs bords (136, 138) du corps de base (116) ; et/ou
b) **que** les parties formant corps d'étanchéité élastiques (126) s'étendent respectivement le long d'un bord (136, 138) d'une partie formant corps de base (124), en particulier le long d'un bord (138) d'une zone de joint (134) des parties formant corps de base (124) ; et/ou
c) **que** les parties formant corps d'étanchéité élastiques (126) des composants d'élément d'étanchéité (122) comprennent respectivement une ou plusieurs, par exemple deux, saillies de positionnement (178) ; et/ou
d) **que** le corps de base (116) présente une hauteur de corps de base (168) constante dans une direction perpendiculaire au plan d'extension principal (130) de l'élément d'étanchéité (110).

10. Système d'étanchéité (100) selon l'une des revendications 1 à 9,
**caractérisé en ce que** le corps d'étanchéité élastique (118) comprend un matériau élastomère (133) ou est formé à partir d'un matériau élastomère (133), dans lequel le matériau élastomère (133) est de préférence un caoutchouc éthylène-acrylate (AEM), un caoutchouc éthylène-propylène-diène (EPDM), un caoutchouc acrylate (ACM), un caoutchouc fluoré (FKM), un caoutchouc acrylonitrile-butadiène hydrogéné (HNBR), un silicone liquide, en particulier un caoutchouc de silicone liquide (LSR), ou un caoutchouc silicone (MVQ), en particulier est un vinyl-méthyl-polysiloxane.

11. Système d'étanchéité (100) selon l'une des revendications 1 à 10, **caractérisé en ce**
a) **que** le corps de base (116) est fabriqué à partir d'un matériau de corps de base métallique (135) ou comprend un matériau de corps de base métallique (135), dans lequel le matériau de corps de base métallique (135) est en particulier de l'acier ou de l'aluminium, ou
b) **que** le corps de base (116) est fabriqué à partir d'un matériau de corps de base en matière plastique ou comprend un matériau de corps de base en matière plastique, dans lequel le matériau de corps de base en matière plastique est en particulier un matériau en matière plastique renforcé par des fibres, par exemple un matériau en matière plastique renforcé par des fibres de verre.

12. Système d'étanchéité (100) selon l'une des revendications 1 à 11,
**caractérisé en ce que** le corps de base (116) et/ou les parties formant corps de base (124) sont fabriqués par estampage et/ou par découpage au laser et/ou par découpage au jet d'eau et/ou par découpage manuel, **ou en ce que** le corps de base (116) et/ou les parties formant corps de base (124) sont fabriqués par moulage par injection.

13. Compartiment pour batterie ou de commande (106), en particulier pour un véhicule automobile (108), comprenant un système d'étanchéité (100) selon l'une des revendications 1 à 12.

14. Véhicule automobile (108), comprenant un ou plusieurs systèmes d'étanchéité (100) selon l'une des revendications 1 à 12, comprenant en particulier un compartiment pour batterie ou de commande (106) selon la revendication 13.

15. Procédé de fabrication d'un système d'étanchéité (100) permettant d'assurer l'étanchéité d'un premier espace pour fluides (102) par rapport à un second espace pour fluides (104) ou à plusieurs espaces pour fluides,
en particulier procédé de fabrication d'un système d'étanchéité (100) selon l'une des revendications 1 à 12, dans lequel le procédé comprend ce qui suit :
fourniture de plusieurs composants d'élément d'étanchéité (122), lesquels comprennent respectivement une partie formant corps de base (124) et une partie formant corps d'étanchéité élastique (126) disposée sur la partie formant corps de base (124) ;
liaison directe ou indirecte, en particulier liaison à la manière d'un puzzle et/ou liaison par complémentarité de forme, des composants d'éléments d'étanchéité (122) entre eux, dans lequel les composants d'éléments d'étanchéité (122) sont fabriqués sous forme de composants séparés les uns des autres,
dans lequel respectivement une partie formant corps d'étanchéité élastique (126) est injectée sur plusieurs parties formant corps de base (124) dans un processus de moulage par injection ou dans lequel respectivement une partie formant corps d'étanchéité élastique (126) est reliée à plusieurs parties formant corps de base (124) au moyen d'un moulage par compression et/ou au moyen d'un moulage à transfert sous pression,
dans lequel des sections de liaison (128) sont fabriquées lors de la fabrication des parties formant corps de base (124) pour la liaison par complémentarité de forme des parties formant corps de base (124),
dans lequel les sections de liaison (128) sont réalisées de manière complémentaire les unes par rapport aux autres de telle sorte qu'elles viennent en prise les unes dans les autres par complémentarité de forme lorsque les parties formant corps de base (124) sont reliées les unes aux autres.
